(19)

**Europäisches Patentamt**
**European Patent Office**
**Office européen des brevets**

(11) **EP 4 462 491 A1**

(12) **EUROPEAN PATENT APPLICATION**

(43) Date of publication:
**13.11.2024 Bulletin 2024/46**

(21) Application number: **24165582.8**

(22) Date of filing: **22.03.2024**

(51) International Patent Classification (IPC):
*H01M 4/04* (2006.01)  *H01M 4/136* (2010.01)
*H01M 4/1391* (2010.01)  *H01M 10/0525* (2010.01)
*H01M 4/131* (2010.01)  *H01M 4/02* (2006.01)

(52) Cooperative Patent Classification (CPC):
**H01M 4/0416; H01M 4/0435; H01M 4/136;**
**H01M 4/1391; H01M 10/0525;** H01M 4/131;
H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.03.2023  KR 20230039384**
**14.07.2023  KR 20230092043**

(71) Applicant: **Samsung SDI Co., Ltd.**
**Yongin-si, Gyeonggi-do 17084 (KR)**

(72) Inventors:
• **KIM, Seongdae**
**17084 Yongin-si (KR)**

• **LEE, Jinhyon**
**17084 Yongin-si (KR)**
• **NAM, Hyun**
**17084 Yongin-si (KR)**
• **PYUN, Ahram**
**17084 Yongin-si (KR)**
• **KWON, Ilkyong**
**17084 Yongin-si (KR)**
• **LEE, Donggeun**
**17084 Yongin-si (KR)**
• **YOON, Yeonhee**
**17084 Yongin-si (KR)**

(74) Representative: **Marks & Clerk LLP**
**15 Fetter Lane**
**London EC4A 1BW (GB)**

(54) **METHOD OF PREPARING DRY ELECTRODE FILM, DRY ELECTRODE, AND LITHIUM BATTERY**

(57)     A method of preparing a dry electrode film, a dry electrode, and a lithium battery are provided. The method includes providing a dry mixture including a dry electrode active material and a dry binder, and processing the dry mixture into a dry electrode film by utilizing a rolling device including a first calender roll and a second calender roll, where the first calender roll has a first rotational speed, and the second calender roll has a second rotational speed, a ratio of the first rotational speed to the second rotational speed is in a range of 1 :greater than 1 to about 1:6, the dry electrode active material includes a first electrode active material and a second electrode active material, and a particle diameter of the first electrode active material is different from a particle diameter of the second electrode active material.

FIG. 1A

1:2

50μm

EP 4 462 491 A1

**Description**

**BACKGROUND**

**1. Field**

One or more embodiments of the present disclosure relate to a method of preparing a dry electrode film, a dry electrode, and a lithium battery.

**2. Description of the Related Art**

In order to achieve miniaturization and high performance of one or more suitable electronic devices, in addition to miniaturization and weight reduction of lithium batteries, high energy density of lithium batteries is becoming important. For example, high-capacity lithium batteries are becoming important and desired.

In electrodes prepared from an electrode slurry including a solvent, an excessive amount of solvent is utilized (e.g., is unavoidable) in preparing the electrode, and thus dry methods that eliminate the utilization of such an organic solvent are (desired and) under review and investigation.

**SUMMARY**

One or more aspects of embodiments of the present disclosure are directed toward a method of preparing a dry electrode film having improved electrolyte impregnability and improved high-rate characteristics by controlling a relative rotational speed of rolls.

One or more aspects of embodiments of the present disclosure are directed toward a dry electrode including a dry electrode film prepared through the method of one or more embodiments of the present disclosure.

One or more aspects of embodiments of the present disclosure are directed toward a lithium battery including the dry electrode.

Additional aspects will be set forth in part in the description which follows and, in part, will be apparent from the description, or may be learned by practice of the presented embodiments of the present disclosure.

According to one or more embodiments of the present disclosure, a method of preparing a dry electrode film includes providing a dry mixture including a dry electrode active material and a dry binder, and processing the dry mixture into a dry electrode film by utilizing a rolling device which includes a first calender roll having a first rotational speed and a second calender roll having a second rotational speed, wherein a ratio of the first rotational speed to the second rotational speed is in a range of 1:greaterthan 1 to about 1:6 (e.g., less than 1:1 to about 1:6, preferably about 0.17 to less than 1), the dry electrode active material includes a first electrode active material and a second electrode active material, and a particle diameter (e.g., average particle diameter, such as D50) of the first electrode active material is different from a particle diameter (e.g., average particle diameter, such as D50) of the second electrode active material.

According to one or more embodiments of the present disclosure, a dry electrode includes an electrode current collector, and a dry electrode film on (e.g., disposed on) at least one surface (e.g., one surface or two surfaces (two opposite surfaces)) of the electrode current collector, and the dry electrode film being prepared through the method of preparing the dry electrode film.

According to one or more embodiments of the present disclosure, a lithium battery includes a first electrode, a second electrode, and an electrolyte between (e.g., disposed between) the first electrode and the second electrode, wherein the first electrode, the second electrode, or a combination thereof (e.g. at least one of the first electrode or the second electrode) is the dry electrode.

At least some of the above and other features of the invention are set out in the claims.

**BRIEF DESCRIPTION OF THE DRAWINGS**

The accompanying drawings are included to provide a further understanding of the present disclosure and are incorporated in and constitute a part of the present disclosure. The drawings illustrate embodiments of the present disclosure and, together with the description, serve to explain principles of the present disclosure. The above and other aspects, features, and advantages of certain embodiments of the present disclosure will be more apparent from the following description taken in conjunction with the accompanying drawings, in which:

FIG. 1A is a scanning electron microscope image of a surface of a dry electrode film prepared in Example 1 according to one or more embodiments of the present disclosure;

FIG. 1B is an image showing a pore area of the surface of the dry electrode film prepared in Example 1 according to one or more embodiments of the present disclosure;

FIG. 2A is a scanning electron microscope image of a surface of a dry electrode film prepared in Example 2 according to one or more embodiments of the present disclosure;

FIG. 2B is an image showing a pore area of the surface of the dry electrode film prepared in Example 2 according to one or more embodiments of the present disclosure;

FIG. 3A is a scanning electron microscope image of a surface of a dry electrode film prepared in Example 3 according to one or more embodiments of the present disclosure;

FIG. 3B is an image showing a pore area of the surface of the dry electrode film prepared in Example 3 according to one or more embodiments of the present disclosure;

FIG. 4A is a scanning electron microscope image of a surface of a dry electrode film prepared in Comparative Example 1 according to one or more embodiments of the present disclosure;

FIG. 4B is an image showing a pore area of the surface of the dry electrode film prepared in Comparative Example 1 according to one or more embodiments of the present disclosure;

FIGs. 5A - 5D are each a cross-sectional view of an electrode according to one or more embodiments of the present disclosure;

FIG. 6 is a schematic view of an electrode according to one or more embodiments of the present disclosure;

FIGs. 7A - 7F are each a cross-sectional view of an electrode according to one or more embodiments of the present disclosure;

FIG. 8 is a cross-sectional view of an electrode according to one or more embodiments of the present disclosure;

FIG. 9 is a side view of an electrode assembly according to one or more embodiments of the present disclosure;

FIG. 10 is a side view of an electrode assembly according to one or more embodiments of the present disclosure;

FIG. 11 is a front view of an electrode assembly according to one or more embodiments of the present disclosure;

FIG. 12 is a schematic view of a lithium battery according to one or more embodiments of the present disclosure;

FIG. 13 is a schematic view of a lithium battery according to one or more embodiments of the present disclosure;

FIG. 14 is a schematic view of a lithium battery according to one or more embodiments of the present disclosure; and

FIG. 15 is a schematic view of a rolling device according to one or more embodiments of the present disclosure.

## DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the terms "and/or" and "or" may include any and all combinations of one or more of the associated listed items. Expressions such as "at least one of," "one of," and "at least one selected from," when preceding a list of elements, modify the entire list of elements and do not modify the individual elements of the list. For example, "at least one of a, b, or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof.

Various implementations are illustrated in the accompanying drawings. The present disclosure may, however, be embodied in different forms and should not be construed as limited to the embodiments set forth herein. Rather, these embodiments are provided so that the present disclosure will be thorough and complete, and will fully convey the scope of the present disclosure to those skilled in the art. Like reference numerals designate like elements.

When it is described that an element is "on" another element, it will be understood that the element may be disposed directly on another element or still another element may be interposed therebetween. On the other hand, when it is described that an element is "directly on" another element, still another element (e.g., an intervening element) is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another element, component, region, layer, or section. Thus, a first element, component, region, layer, or section described may be termed a second element, component, region, layer, or section without departing from the teachings of the present specification.

The term utilized herein is intended to describe only a specific embodiment and is not intended to limit the present disclosure. As utilized herein, the singular forms "a," "an," and "the" are intended to include the plural forms, including "at least one," unless the content clearly indicates otherwise. "At least one" should not be construed as being limited to the singular. As utilized herein, the term "and/or" includes any and all combinations of one or more of the associated listed items. The terms "comprise(s)/include(s)," "comprising/including," "have/has," and/or "having," when utilized in the detailed description, specify a presence of stated features, regions, integers, steps, operations, elements, and/or components, but do not preclude the presence or addition of one or more other features, regions, integers, steps, operations, elements, components, and/or groups thereof. The symbol "/" utilized herein may be interpreted as "and" or "or" according to the context. Further, the use of "may" when describing embodiments of the present disclosure refers to "one or more embodiments of the present disclosure".

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilization or operation in addition to the orientation illustrated in the drawings. For example, when a device in the drawings is turned over, elements described as "below" or "beneath" other elements or features would then be "above" or "over" the other elements or features. Thus, the example term "below" may encompass both (e.g., simultaneously) orientations of above and below. The device may be otherwise oriented (rotated 90 degrees or at other orientations), and the spatially relative terms utilized herein may be interpreted accordingly.

Unless otherwise defined, all terms (including technical and scientific terms) utilized herein have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross-sectional views which are schematic diagrams of idealized embodiments. As such, variations from the shapes of the illustrations as a result, for example, of manufacturing techniques and/or tolerances, are to be expected. Thus, the embodiments described herein should not be construed as limited to the particular shapes regions of illustrated herein but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

In the present disclosure, the term "dry" or "dry type or kind" refers to a state that is not intentionally in contact with a solvent such as a process solvent or a state that does not intentionally include a solvent. For example, a dry electrode active material refers to an electrode active material that is not intentionally in contact with a solvent or an electrode active material that does not intentionally include a solvent. For example, a dry conductive material refers to a conductive material that is not intentionally in contact with a solvent or a conductive material that does not intentionally include a solvent. For example, a dry binder refers to a conductive material that is not intentionally in contact with a solvent or a binder that does not intentionally include a solvent. For example, a binder in a liquid state at room temperature without being mixed with a solvent is a dry binder.

As utilized herein, the term "particle diameter" of particles refers to an average diameter if (e.g., when) particles are spherical and refers to an average major axis length if (e.g., when) particles are non-spherical. A particle diameter of particles may be measured by utilizing a particle size analyzer (PSA). A "particle diameter" of particles is, for example, an "average particle diameter." An average particle diameter refers to, for example, a median particle diameter (D50). The median particle diameter (D50) is a particle size corresponding to a 50 % cumulative volume when a particle size distribution measured through a laser diffraction method is calculated from particles having a smaller particle size to particles having a larger particle size.

D50 refers to a particle size corresponding to a 50 % cumulative volume when a particle size distribution measured through a laser diffraction method is calculated from particles having a smaller particle size to particles having a larger particle size.

D90 refers to a particle size corresponding to a 90 % cumulative volume when a particle size distribution measured through a laser diffraction method is calculated from particles having a smaller particle size to particles having a larger particle size.

D10 refers to a particle size corresponding to a 10 % cumulative volume when a particle size distribution measured through a laser diffraction method is calculated from particles having a smaller particle size to particles having a larger particle size.

The "aspect ratio" used herein may refer to the average aspect ratio and may be determined from SEM images.

As utilized herein, the term "dry electrode" or "dry electrode film" refers to an electrode or electrode film which does not include a solvent or in which a solvent is not intentionally utilized in an electrode preparing process. Solvents include process solvents, process solvent residues, process solvent impurities, and/or the like.

As utilized herein, a "self-standing film" may include a binder matrix structure, and the binder matrix structure may support an electrode film or electrode layer so that the electrode film or electrode layer may be self-standing or self-supporting. A self-standing electrode film or self-standing electrode active material layer may include a binder matrix structure and thus may be utilized in manufacturing a lithium battery without a support such as a current collector. The self-standing electrode film or self-standing electrode active material layer may have sufficient film strength or layer strength to be rolled, handled, and/or unrolled, for example without other supports.

As utilized herein, the term "wet electrode" or "wet electrode film" refers to an electrode or electrode film which includes a solvent or in which a solvent is intentionally utilized in an electrode preparing process. The solvent included in the wet electrode or wet electrode film includes process solvents, process solvent residues, process solvent impurities, and/or the like. In one or more embodiments, the term "wet electrode" or "wet electrode film" refers to an electrode or electrode film prepared by preparing an electrode slurry including a solvent and drying the electrode slurry.

As utilized herein, "Group" refers to a group of the periodic table of the elements according to the International Union of Pure and Applied Chemistry ("IUPAC") Groups 1-18 group classification system.

The term "metal" as utilized herein may include all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

The term "cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

While example embodiments will be described, alternatives, modifications, variations, improvements, and substantial equivalents thereof that are or may be presently unforeseen may arise to applicants or others skilled in the art. The appended claims as filed and as they may be amended are intended to embrace all such alternatives, modifications, variations, improvements, and substantial equivalents.

Hereinafter, a method of preparing a dry electrode film, a dry electrode including a dry electrode film prepared through the method, and a lithium battery including the dry electrode according to one or more embodiments will be described in more detail.

A method of preparing a dry electrode film according to one or more embodiments may include providing a dry mixture including a dry electrode active material and a dry binder, and processing a dry mixture into a dry electrode film by utilizing a rolling device which includes a first calender roll having a first rotational speed and a second calender roll having a second rotational speed, wherein a ratio of the first rotational speed to the second rotational speed may be in a range of 1 :greater than 1 to about 1:6, for example, about 1:1.5 to about 1:6, the dry electrode active material may include a first electrode active material (e.g., in particle form (e.g., in the form of particles)) and a second electrode active material (e.g., in particle form (e.g., in the form of particles)), and a particle diameter (e.g., average particle diameter, such as D50) of the first electrode active material may be different from a particle diameter (e.g., average particle diameter, such as D50) of the second electrode active material. In some embodiments, the ratio of the first rotational speed to the second rotational speed may be, for example, in a range of about 1:1.5 to about 1:6, about 1:1.8 to about 1:6, about 1:2 to about 1:6, about 1:3 to about 1:6, or about 1:4 to about 1:6.

In one or more embodiments, a dry mixture which includes a dry binder and first and second cathode active materials having different particle diameters (e.g., average particle diameters, such as D50) may be put between a pair of calender rolls having a rotational speed ratio in a certain range, thereby preparing a dry electrode film having increased surface porosity. The surface porosity of the dry electrode film may be improved, thereby improving the electrolyte impregnability of the dry electrode film. In some embodiments, the charge/discharge characteristics of a lithium battery including such a dry electrode film may be improved. For example, the high-rate characteristics of a lithium battery including such a dry electrode film may be improved.

In some embodiments, in a wet electrode, the surface porosity of an electrode active material layer may be reduced because a relatively larger content (e.g., amount) of a binder is disposed on a surface of the electrode active material layer during a slurry drying process. In comparison, in some embodiments, if (e.g., when) the ratio of the first rotational speed of the first calender roll to the second rotational speed of the second calender roll is 1:1 during preparation of a dry electrode film, the first rotational speed of the first calender roll may be substantially similar to or the same as the second rotational speed of the second calender roll, and thus the surface porosity of the dry electrode film may be relatively reduced. In some embodiments, the cycle characteristics of a lithium battery including such a dry electrode film may be deteriorated. If (e.g., when) the ratio of the first rotational speed of the first calender roll to the second rotational speed of the second calender roll is excessively increased during preparation of a dry electrode film, cracks may occur in the dry electrode film. In some embodiments, it may be difficult to stably prepare a dry electrode film having a substantially uniform shape.

The dry electrode active material may include the first electrode active material and the second electrode active material. The first electrode active material may be, for example, a large-diameter electrode active material having a larger particle diameter (e.g., average particle diameter, such as D50) than that of the second electrode active material, and the second electrode active material may be, for example, a small-diameter electrode active material having a smaller particle diameter (e.g., average particle diameter, such as D50) than that of the first electrode active material. In one or more embodiments, the first electrode active material and the second electrode active material may be, for example, a first cathode active material and a second cathode active material, respectively. In one or more embodiments, the first electrode active material and the second electrode active material may be, for example, a first lithium transition metal oxide and a second lithium transition metal oxide, respectively. The first lithium transition metal oxide may be a large-diameter lithium transition metal oxide, and the second lithium transition metal oxide may be a small-diameter lithium transition metal oxide. In some embodiments, the first electrode active material may be the large-diameter lithium transition metal oxide, and the second electrode active material may be the small-diameter lithium transition metal oxide. For example, second electrode active materials having a smaller particle diameter (e.g., average particle diameter, such as D50) than that of first electrode active materials may be in (e.g., disposed in) pores between the first electrode active materials (e.g., between the first electrode active material particles). Second electrode active material particles which are small-diameter particles may be in (e.g., disposed in) pores between first electrode active material particles which are large-diameter particles, thereby concurrently (e.g., simultaneously) improving the ionic conductivity and the electronic conductivity of the dry electrode film including the first electrode active material and the second electrode active material. In some embodiments, the energy density of an electrode including the dry electrode film may be improved. In some embodiments, the energy density and cycle characteristics of a lithium battery including such a dry electrode film may be improved. The dry electrode film may include the first electrode active material and the second electrode active material, and the rolling device may have the ratio of the first rotational speed of the first calender roll to the second rotational speed of the second calender roll so that the surface porosity of the prepared dry electrode film may be improved. In some embodiments, the first electrode active material and the second electrode active material may be, for example, a first anode active material and a second anode active material.

In one or more embodiments, a ratio of an area occupied by particles of the first electrode active material (e.g., by particles of the first electrode active material in/on a surface of the dry electrode film) to the total area of a surface of the dry electrode film may be, for example, 30 % or more, 40 % or more, 50 % or more, 60 % or more, or 70 % or more. The ratio of the area occupied by the particles of the first electrode active material to the total area of the surface of the dry electrode film may be 50 % or more so that the surface porosity of the dry electrode film may be improved and the electrolyte impregnability thereof may be improved. In some embodiments, the cycle characteristics of a lithium battery including such a dry electrode film, for example, the high-rate characteristics thereof, may be improved. The ratio of the area occupied by the particles of the first electrode active material to the total area of the surface of the dry electrode film may be calculated, for example, from a scanning electron microscope image through image analysis utilizing software or a manual computation.

The ratio of the area occupied by the particles of the first electrode active material to the total area of the surface of the dry electrode film prepared through the above-described method of preparing a dry electrode film may be, for example, in a range of about 30 % to about 90 %, about 40 % to about 90 %, about 50 % to about 90 %, about 60 % to about 90 %, about 70 % to about 90 %, about 75 % to about 90 %, or about 80 % to about 90 %. If (e.g., when) the ratio of the area occupied by the particles of the first electrode active material to the total area of the dry electrode film is excessively low, the surface porosity of the dry electrode film may decrease, and the electrolyte impregnability thereof may decrease. In some embodiments, the cycle characteristics of a lithium battery including such a dry electrode film, for example, the high-rate characteristics thereof, may be deteriorated.

If (e.g., when) the ratio of the area occupied by the particles of the first electrode active material to the total area of the surface of the dry electrode film is excessively high, cracks may occur in particles of the first electrode active material disposed on the surface of the dry electrode film, and the particles of the first electrode active material may be concentrated on the surface of the dry electrode film, which may cause a nonuniform composition distribution inside the dry electrode film. In some embodiments, the lifespan characteristics of a lithium battery including such a dry electrode film may be deteriorated.

In one or more embodiments, a loading level (loading level 1 LL1) of the dry electrode film may be lower than a loading level LL2 of a dry electrode film (e.g., a comparable dry electrode film) processed, for example, by utilizing the rolling device in which the ratio of the first rotational speed of the first calender roll to the second rotational speed of the second calender roll is 1:1. In some embodiments, a ratio LL1/LL2 of the loading level LL1 of the dry electrode film prepared through the above-described method of preparing a dry electrode film to the loading level LL2 of the dry electrode film processed by utilizing the rolling device in which the ratio of the first rotational speed of the first calender roll to the second rotational speed of the second calender roll is 1:1 may be, for example, 0.9 or less, 0.85 or less, 0.8 or less, or 0.75 or less. The dry electrode film prepared through the above-described method of preparing a dry electrode film may have a low loading level in such a range (e.g., the range described above), the number of additional rolling processes may be reduced, or the additional rolling process may not be provided or needed. The dry electrode film prepared through the above-described method of preparing a dry electrode film may have a thin dry electrode film thickness in such a range, the number of additional rolling processes may be reduced, or the additional rolling process may not be provided or needed. In some embodiments, a process of preparing the dry electrode film may be simplified, thereby improving the production efficiency of the dry electrode film.

The loading level LL1 of the dry electrode film of one or more embodiments of the present disclosure may be, for example, in a range of about 10 $mg/cm^2$ to about 50 $mg/cm^2$, about 15 $mg/cm^2$ to about 50 $mg/cm^2$, about 20 $mg/cm^2$ to about 40 $mg/cm^2$, or about 20 $mg/cm^2$ to about 30 $mg/cm^2$. The loading level of a dry electrode film may be calculated, for example, from a weight, thickness, and volume of the dry electrode film and a theoretical density of constituent components thereof. In one or more embodiments, a loading level of an electrode in which a dry electrode film is disposed on each of two surfaces of a current collector may be, for example, in a range of about 20 $mg/cm^2$ to about 100 $mg/cm^2$, about 30 $mg/cm^2$ to about 100 $mg/cm^2$, about 40 $mg/cm^2$ to about 80 $mg/cm^2$, about 40 $mg/cm^2$ to about 60 $mg/cm^2$, or about 45 $mg/cm^2$ to about 60 $mg/cm^2$.

In one or more embodiments, a surface porosity (porosity P1) of the dry electrode film may be higher than a surface porosity P2 of the dry electrode film (e.g., the comparable dry electrode film) processed, for example, by utilizing the rolling device in which the ratio of the first rotational speed of the first calender roll to the second rotational speed of the second calender roll is 1:1. In some embodiments, a ratio P1/P2 of the surface porosity P1 of the dry electrode film prepared through the above-described method of preparing a dry electrode film to the surface porosity P2 of the dry electrode film processed by utilizing the rolling device in which the ratio of the first rotational speed of the first calender roll to the second rotational speed of the second calender roll is 1:1 may be, for example, 1.1 or more, 1.15 or more, 1.2 or more, or 1.25 or more. The dry electrode film prepared through the above-described method of preparing a dry electrode film may have a low packing density in such a range (e.g., the range described above), the electrolyte impregnability of the dry electrode film may be improved. In some embodiments, the cycle characteristics of a lithium battery including such a dry electrode film, for example, the high-rate characteristics thereof, may be improved.

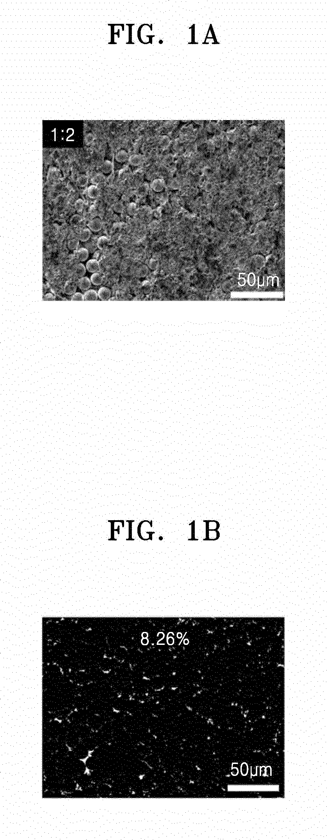

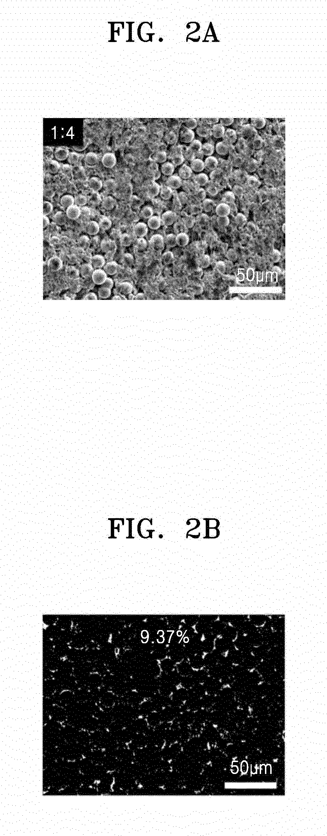

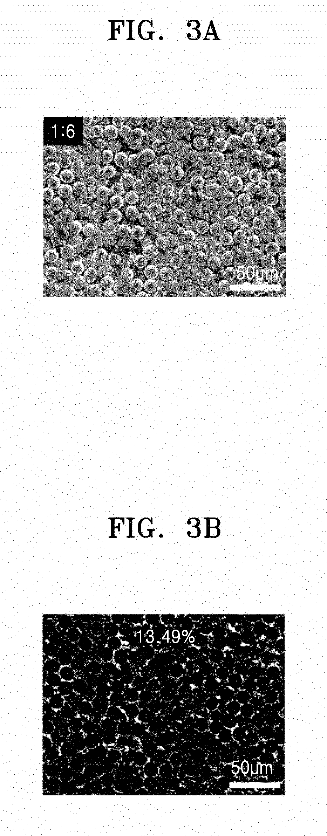

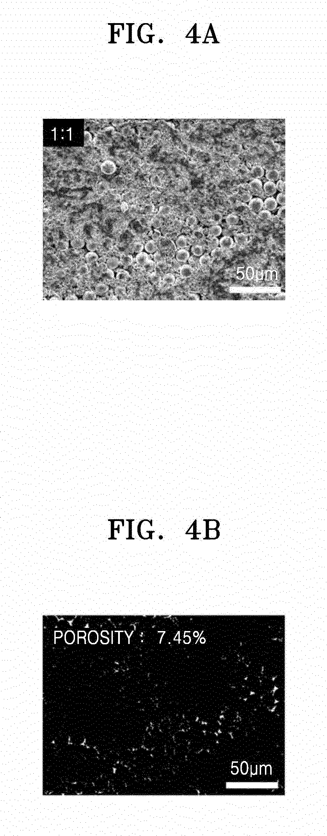

The surface porosity P1 of the dry electrode film of one or more embodiments of the present disclosure may be, for example, in a range of about 8 % to about 30 %, about 8 % to about 25 %, about 8 % to about 20 %, or about 8 % to about 15 % (e.g. about 9 % to about 30 %, about 9 % to about 25 %, about 9 % to about 20 %, or about 9 % to about 15 %; or about 10 % to about 30 %, about 10 % to about 25 %, about 10 % to about 20 %, or about 10 % to about 15 %). Referring to FIGs. 1A to 4B, a surface porosity of a dry electrode film, for example, a ratio of an area occupied by pores (e.g., by pores in a surface of the dry electrode film) to the total area of a surface of the dry electrode film, may be calculated, for example, from a scanning electron microscope image through image analysis by utilizing software or a manual computation. If (e.g., when) the ratio of the area occupied by the pores to the total surface area of the dry electrode film is 8 % or more, the surface porosity of the dry electrode film may be improved, and the electrolyte impregnability thereof may be improved. In some embodiments, the cycle characteristics of a lithium battery including such a dry electrode film, for example, the high-rate characteristics thereof, may be improved.

In one or more embodiments, a packing density (packing density 1 PD1) of the dry electrode film may be lower than a packing density PD2 of the dry electrode film (e.g., the comparable dry electrode film) processed, for example, by utilizing the rolling device in which the ratio of the first rotational speed of the first calender roll to the second rotational speed of the second calender roll is 1:1. In some embodiments, a ratio PD1/PD2 of the packing density PD1 of the dry electrode film prepared through the above-described method of preparing a dry electrode film to the packing density PD2 of the dry electrode film processed by utilizing the rolling device in which the ratio of the first rotational speed of the first calender roll to the second rotational speed of the second calender roll is 1:1 may be, for example, 0.90 or less, 0.85 or less, 0.80 or more, or 0.75 or more. The dry electrode film prepared through the above-described method of preparing a dry electrode film may have a low packing density in such a range (e.g., the range described above), the electrolyte impregnability of the dry electrode film may be improved. In some embodiments, the cycle characteristics of a lithium battery including such a dry electrode film, for example, the high-rate characteristics thereof, may be improved.

The packing density of the dry electrode film of one or more embodiments, may be, for example, in a range of about 1 $g/cm^3$ to about 5 $g/cm^3$, about 2 $g/cm^3$ to about 5 $g/cm^3$, about 3 $g/cm^3$ to about 5 $g/cm^3$, or about 3 $g/cm^3$ to about 4 $g/cm^3$. The packing density of the dry electrode film may be derived by measuring a volume and weight of the prepared dry electrode film. The dry electrode film may have a packing density in such a range (e.g., the range described above), a lithium battery, which includes an electrode including the dry electrode film, may concurrently (e.g., simultaneously) have improved energy density and excellent or suitable high-rate characteristics.

In one or more embodiments, a ratio d1/d2 of a particle diameter d1 (e.g., average particle diameter, such as D50) of the first electrode active material to a particle diameter d2 (e.g., average particle diameter, such as D50) of the second electrode active material may be, for example, in a range of more than 1 to about 6, about 1.5 to about 6, about 2 to about 6, or about 2 to about 5.

If (e.g., when) the ratio d1/d2 of the particle diameter d1 of the first electrode active material to the particle diameter d2 of the second electrode active material is excessively increased, the particle diameter of the first electrode active material may be excessively increased, and thus the dry electrode active material may be substantially similar to a component including only the first electrode active material, which may make it difficult to prevent or reduce a nonuniform distribution of the first electrode active material such as aggregation of the first electrode active material. If (e.g., when) the ratio d1/d2 of the particle diameter d1 of the first electrode active material to the particle diameter d2 of the second electrode active material is 1 or less, the first electrode active material and the second electrode active material may become components having substantially a similar or same size, which may make it difficult to suppress or reduce a nonuniform distribution of the first electrode active material such as aggregation of the first electrode active material.

In one or more embodiments, the particle diameter (e.g., average particle diameter, such as D50) of the first electrode active material may be, for example, in a range of about 7 $\mu$m to about 40 $\mu$m, about 7 $\mu$m to about 30 $\mu$m, about 7 $\mu$m to about 20 $\mu$m, or about 7 $\mu$m to about 15 $\mu$m; or about 10 $\mu$m to about 40 $\mu$m, about 10 $\mu$m to about 30 $\mu$m, about 10 $\mu$m to about 20 $\mu$m, or about 10 $\mu$m to about 15 $\mu$m. The particle diameter (e.g., average particle diameter, such as D50) of the second electrode active material may be, for example, in a range of about 1 $\mu$m to about 10 $\mu$m, about 1 $\mu$m to about 8 $\mu$m, about 1 $\mu$m to about 6 $\mu$m, about 1 $\mu$m to about 5 $\mu$m, about 2 $\mu$m to about 5 $\mu$m, or about 2 $\mu$m to about 4 $\mu$m. The first electrode active material and the second electrode active material may each have a particle diameter in such a range (e.g., the range described above), the energy density and/or cycle characteristics of a lithium battery, which includes the dry electrode film including the first electrode active material and the second electrode active material, may be further improved. The particle diameters of the first electrode active material and the second electrode active material may each be, for example, an average particle diameter. An average particle diameter may be measured by utilizing, for example, a measuring device utilizing a laser diffraction method or a dynamic light scattering method. An average particle diameter may be measured by utilizing a laser scattering particle size distribution meter (for example, LA-920 manufactured by Horiba Corporation) and may be a value of a median diameter (D50) when particles are accumulated to 50 % from smaller particles in volume conversion to the larger particles. In some embodiments, an average particle diameter may be an arithmetic average value of particle diameters of particles measured, for example, from a scanning electron microscope image through image analysis performed by utilizing software or a manual computation.

In one or more embodiments, an electrode active material (e.g., a dry electrode active material) may include the first electrode active material and the second electrode active material and thus may have, for example, a distribution profile according to a particle diameter (e.g., average particle diameter, such as D50), such as a bimodal particle size distribution in a particle size distribution diagram. For example, in one or more embodiments, a mixture of the first electrode active material and the second electrode active material may have a bimodal particle size distribution having two peaks in a particle size distribution diagram obtained by utilizing a particle size analyzer (PSA) and/or the like. The electrode active material may have a bimodal particle size distribution having a first particle size peak corresponding to the first electrode active material and a second particle size peak corresponding to the second electrode active material in a particle size distribution diagram. The first electrode active material and the second electrode active material may have such a bimodal particle size distribution so that the energy density of an electrode including the first electrode active material and the second electrode active material may be further improved, and the cycle characteristics of a lithium battery including such an electrode may also be improved.

In one or more embodiments, a weight ratio of the first electrode active material to the second electrode active material may be, for example, in a range of about 90:10 to about 60:40, about 85:15 to about 65:35, or about 80:20 to about 70:30. The first electrode active material and the second electrode active material may have a weight ratio in such a range (e.g., the ranges described above) so that the energy density of an electrode, which includes the dry electrode film including the dry electrode active material, may be further improved, and the cycle characteristics of a lithium battery including such an electrode may also be improved.

In one or more embodiments, the dry electrode active material may include, for example, a lithium transition metal oxide.

The dry electrode active material may be, for example, a dry cathode active material. As the dry cathode active material, any material may be utilized as long as the material is a lithium transition metal oxide and is utilized in the art.

For example, in one or more embodiments, the dry cathode active material may include at least one composite oxide of lithium and a metal selected from cobalt, manganese, nickel, and one or more combinations thereof. Non-limiting examples of the dry cathode active material may include a compound represented by any one of formulas of $Li_aA_{1-b}B'_bD_2$ (wherein $0.90 \leq a \leq 1$ and $0 \leq b \leq 0.5$), $Li_aE_{1-b}B'_bO_{2-c}O_c$ (wherein $0.90 \leq a \leq 1$, $0 \leq b \leq 0.5$, and $0 \leq c \leq 0.05$), $LiE_{2-b}B'_bO_{4-c}D_c$ (wherein $0 \leq b \leq 0.5$ and $0 \leq c \leq 0.05$), $Li_aNi_{1-b-c}Co_bB'_cD_\alpha$ (wherein $0.90 \leq a \leq 1$, $0 \leq b \leq 0.5$, $0 \leq c \leq 0.05$, and $0 < \alpha \leq 2$), $Li_aNi_{1-b-c}Co_bB'_cC_{2-\alpha}F'_\alpha$ (wherein $0.90 \leq a \leq 1$, $0 \leq b \leq 0.5$, $0 \leq c \leq 0.05$, and $0 < \alpha < 2$), $Li_aNi_{1-b-c}Co_bB'_cO_2$ (wherein $0.90 \leq a \leq 1$, $0 \leq b \leq 0.5$, and $0 \leq c \leq 0.05$), $Li_aNi_{1-b-c}Mn_bB'_cD_\alpha$ (wherein $0.90 \leq a \leq 1$, $0 \leq b \leq 0.5$, $0 \leq c \leq 0.05$, and $0 < \alpha < 2$), $Li_aNi_{1-b-c}Mn_bB'_cO_{2-\alpha}F'_\alpha$ (wherein $0.90 \leq a \leq 1$, $0 \leq b \leq 0.5$, $0 \leq c \leq 0.05$, and $0 < \alpha < 2$), $Li_aNi_{1-b-c}Mn_bB'_cO_2$ (wherein $0.90 \leq a \leq 1$, $0 \leq b \leq 0.5$, and $0 \leq c \leq 0.05$), $Li_aNi_bE_cG_dO_2$ (wherein $0.90 \leq a \leq 1$, $0 \leq b \leq 0.9$, and $0 \leq c \leq 0.5$, and $0.001 \leq d \leq 0.1$), $Li_aNi_bCo_cMn_dG_eO_2$ (wherein $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (wherein $0.90 \leq a \leq 1$ and $0.001 \leq b \leq 0.1$), $Li_aCoG_bO_2$ (wherein $0.90 \leq a \leq 1$ and $0.001 \leq b \leq 0.1$), $Li_aMnG_bO_2$ (wherein $0.90 \leq a \leq 1$ and $0.001 \leq b \leq 0.1$), $Li_aMn_2G_bO_4$ (wherein $0.90 \leq a \leq 1$ and $0.001 \leq b \leq 0.1$), $QO_2$, $QS_2$, $LiQS_2$, $V_2O_5$, $LiV_2O_5$; $LiI'O_2$, $LiNiVO_4$, $Li_{(3-f)}J_2(PO_4)_3$ (wherein $0 \leq f \leq 2$), $Li_{(3-f)}Fe_2(PO_4)_3$ (wherein $0 \leq f \leq 2$), and $LiFePO_4$.

In the formulas representing the above-described compounds, A may be nickel (Ni), cobalt (Co), manganese (Mn), or one or more combinations thereof, B' may be aluminium (Al), Ni, Co, Mn, chromium (Cr), iron (Fe), magnesium (Mg), strontium (Sr), vanadium (V), a rare earth element, or one or more combinations thereof, D may be oxygen (O), fluorine (F), sulfur (S), phosphorus (P), or one or more combinations thereof, E may be Co, Mn, or a combination thereof, F' may be F, S, P, or one or more combinations thereof, G may be Al, Cr, Mn, Fe, Mg, lanthanum (La), cerium (Ce), Sr, V, or one or more combinations thereof, Q may be titanium (Ti), molybdenum (Mo), Mn, or one or more combinations thereof, I' may be Cr, V, Fe, scandium (Sc), yttrium (Y), or one or more combinations thereof, and J may be V, Cr, Mn, Co, Ni, copper (Cu), or one or more combinations thereof.

In one or more embodiments, a compound constituting a coating layer which is added to (e.g., coated on) a surface of the above compound (i.e., composite oxide of lithium and transition metal) may also be utilized, in some embodiments, a mixture of the above compound and a compound constituting a coating layer may also be utilized. The coating layer added to (e.g., coated on) the surface of the above compound may include, for example, a coating element compound of an oxide or a hydroxide of a coating element, an oxyhydroxide of a coating element, an oxycarbonate of a coating element, and/or a hydroxycarbonate of a coating element. The compound constituting a coating layer may be amorphous or crystalline. The coating element included in the coating layer may include Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a mixture thereof. A method of forming a coating layer may be selected within a range that does not adversely affect the physical properties of a cathode active material. A coating method may include, for example, spray coating, dipping, and/or the like. A specific coating method may be well understood by those skilled in the art, and thus a detailed description thereof will not be provided.

In one or more embodiments, the first electrode active material and the second electrode active material may each independently include a lithium transition metal oxide having such a composition. The composition of the first electrode active material may be the same as or different from the composition of the second electrode active material.

In one or more embodiments, the dry cathode active material may include, for example, at least one compound selected from among lithium transition metal oxides represented by Formulas 1 to 8:

Formula 1    $Li_aNi_xCo_yM_zO_{2-b}A_b$

In Formula 1,
$1.0 \leq a \leq 1.2$, $0 \leq b \leq 0.2$, $0.8 \leq x < 1$, $0 \leq y \leq 0.3$, $0 < z \leq 0.3$, $x+y+z=1$, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof.

Formula 2    $LiNi_xCo_yMn_zO_2$

Formula 3    $LiNi_xCo_yAl_zO_2$

In Formula 2 and Formula 3, $0.8 \leq x \leq 0.95$, $0 \leq y \leq 0.2$, $0 < z \leq 0.2$, and $x+y+z=1$.

Formula 4    $LiNi_xCo_yMn_zAl_wO_2$

In Formula 4, $0.8 \leq x \leq 0.95$, $0 \leq y \leq 0.2$, $0 < z \leq 0.2$, $0 < w \leq 0.2$, and $x+y+z+w=1$.

Formula 5    $Li_aCo_xM_yO_{2-b}A_b$

In Formula 5, $1.0 \leq a \leq 1.2$, $0 \leq b \leq 0.2$, $0.9 \leq x \leq 1$, $0 \leq y \leq 0.1$, $x+y=1$, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof.

**Formula 6** $\quad\quad$ $Li_aNi_xMn_yM'_zO_{2-b}A_b$

In Formula 6, $1.0\le a\le 1.2$, $0\le b\le 0.2$, $0<x\le 0.3$, $0.5\le y<1$, $0<z\le 0.3$, $x+y+z=1$, M' may be cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminium (Al), boron (B), or a combination thereof, and A may be F, S, Cl, Br, or a combination thereof,

**Formula 7** $\quad\quad$ $Li_aM1_xM2_yPO_{4-b}X_b$

In Formula 7, $0.90\le a\le 1.1$, $0\le x\le 0.9$, $0\le y\le 0.5$, $0.9<x+y<1.1$, $0\le b\le 2$, M1 may be chromium (Cr), manganese (Mn), iron (Fe), cobalt (Co), nickel (Ni), copper (Cu), zirconium (Zr), or a combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or combination thereof, and X may be O, F, S, P, or a combination thereof.

**Formula 8** $\quad\quad$ $Li_aM3_zPO_4$

In Formula 8, $0.90\le a\le 1.1$, $0.9\le z\le 1.1$, and M3 may be chromium (Cr), manganese (Mn), iron (Fe), cobalt (Co), nickel (Ni), copper (Cu), zirconium (Zr), or a combination thereof.
A content (e.g., amount) of a cathode active material included in a dry cathode film may be, for example, in a range of about 80 wt% to about 99 wt% or about 90 wt% to about 98 wt% with respect to the total weight of the dry cathode film.
In one or more embodiments, the first electrode active material and the second electrode active material may each independently include the lithium transition metal oxide selected from Formulas 1 to 8. The composition of the first electrode active material may be the same as or different from the composition of the second electrode active material.
In one or more embodiments, the dry electrode film may include the dry binder. The dry binder may be, for example, a binder that is not impregnated, dissolved, or dispersed in a process solvent in a process of preparing a dry electrode film. The dry binder may be, for example, a binder that does not include a process solvent or is not in contact with a process solvent in a process of preparing a dry electrode film. The dry binder may be, for example, a fibrillized binder or a fibrous binder. The fibrillized binder or fibrous binder may serve as a matrix for supporting and binding an electrode active material and other components included in an electrode active material layer. It may be confirmed that the fibrillized binder or fibrous binder has a fibrous form, for example, from a scanning electron microscope image of a cross section of an electrode. The fibrillized binder or fibrous binder may have an aspect ratio of, for example, 10 or more, 20 or more, 50 or more, or 100 or more. In certain context, the terms "fibril" or "fibrils" as utilized herein refer to one or more discrete individual units of a substance in fiber form. As utilized herein and in certain context, the terms "fibrillized" and "fibrillize" refer to a process of aligning at least a portion of fibers of a substance along a longitudinal direction of the fibers utilizing a mixer.
The dry binder may include, for example, polytetrafluoroethylene (PTFE), a polyvinylidene fluoride-hexapropylene (PVDF-HFP) copolymer, polyvinylidene fluoride (PVDF), polyvinyl alcohol (PVA), polyacrylonitrile, carboxymethylcellulose (CMC), starch, hydroxypropylcellulose, cellulose, polyvinylpyrrolidone (PVP), polyethylene (PE), polypropylene (PP), ethylene-propylene-diene monomer (EPDM) rubber, a sulfonated-EPDM rubber, styrene butadiene rubber (SBR), fluoro rubber, or a copolymer thereof, or one or more combinations thereof, but embodiments of the present disclosure are not necessarily limited thereto. Any binder utilized in preparing a dry electrode may be utilized. In one or more embodiments, the dry binder may include, for example, a fluorine-based binder. The fluorine-based binder may include, for example, PTFE, a PVDF-HFP copolymer, and/or PVDF.
In one or more embodiments, a glass transition temperature Tg of the dry binder may be, for example, in a range of about -30 °C to about 150 °C, about 15 °C to about 150 °C, about 15 °C to about 130 °C, about 50 °C to about 130 °C, about 100 °C to about 130 °C, or about 120 °C to about 130 °C. In some embodiments, the glass transition temperature Tg of the dry binder may be, for example, in a range of about - 30 °C to about 150 °C, about -30 °C to about 100 °C, about -30 °C to about 50 °C, about -30 °C to about 15 °C, about -30 °C to about -10 °C, or about -30 °C to about -20 ° C. A glass transition temperature of PTFE may be, for example, in a range of about 120 °C to about 130 °C. The dry binder may have a glass transition temperature in such a range (e.g., the range described above), the fibrillized binder or fibrous binder may be more easily obtained in a process of preparing a dry electrode. The glass transition temperature of the dry binder may be for example measured by DSC (Differential Scanning Calorimeter), DMA (Dynamic Mechanical Analyzer), TMA (Thermomechanical Analyzer), and/or TGA (Thermogravimetric Analyzer).
A content (e.g., amount) of the dry binder may be, for example, in a range of about 0.1 wt% to about 5 wt%, about 0.5 wt% to about 4 wt%, or about 1 wt% to about 3 wt% with respect to the total weight of the dry electrode film. The dry electrode film may include the dry binder in such a range (e.g., the range described above) so that a binding force of the dry electrode film may be improved, and the dry electrode film may maintain a high energy density.

In one or more embodiments, the dry electrode film may further include, for example, a conductive material. The conductive material may be, for example, a dry conductive material. The dry conductive material may be, for example, a conductive material that is not impregnated, dissolved, or dispersed in a process solvent in a process of preparing a dry electrode film. The dry conductive material may be, for example, a conductive material that does not include a process solvent or is not in contact with a process solvent in a process of preparing a dry electrode film. In some embodiments, the dry conductive material may include, for example, a carbon-based conductive material. The carbon-based conductive material may include, for example, a fibrous carbon-based material having an aspect ratio of 10 or more, a particulate carbon-based material having an aspect ratio of less than 10, or a combination thereof.

The fibrous carbon-based material having an aspect ratio of 10 or more may include, for example, a carbon fiber, carbon nanotubes, carbon nanobelts, and/or the like, but embodiments of the present disclosure are not limited thereto. Any material utilized as a carbon-based conductive material in the art may be utilized. In some embodiments, the fibrous carbon-based material having an aspect ratio of 10 or more may be selected from second carbon-based materials. A fibrous carbon-based conductive material may be distinguished from a second carbon-based material constituting a portion of a dry electrode active material in that the fibrous carbon-based conductive material is simply mixed with a dry electrode active material.

The particulate carbon-based material having an aspect ratio of less than 10 may include, for example, Denka black, carbon black, acetylene black, Ketjen black, natural graphite, artificial graphite, and/or the like, but embodiments of the present disclosure are not limited thereto. Any material utilized as a carbon-based conductive material in the art may be utilized. The aspect ratio of the particulate carbon-based material may be, for example, in a range of about 1 to about 7, about 1 to about 5, about 1 to about 3, or about 1 to about 2.

A content (e.g., amount) of the dry conductive material included in the dry electrode film may be, for example, in a range of about 0.1 wt% to about 5 wt%, about 0.5 wt% to about 4 wt%, or about 1 wt% to about 3 wt% with respect to the total weight of the dry electrode film. The dry electrode film may include the dry conductive material in such a range (e.g., the range described above) so that the conductivity of the dry electrode film may be improved, and the cycle characteristics of a lithium battery including such a dry electrode film may be improved.

The dry electrode film may be free of a residual process solvent. A process solvent may not be utilized in a process of preparing the dry electrode film because the dry electrode film includes the dry electrode active material, the dry binder, and the dry conductive material, and thus the dry electrode film may be free of any intentionally utilized residual process solvent.

In one or more embodiments, the dry electrode film may have, for example, a tensile strength of 500 kPa or more, 700 kPa or more, or 1000 kPa or more at a temperature of 25 °C. in some embodiments, the dry electrode film may have, for example, a tensile strength of about 500 kPa to about 5,000 kPa, about 700 kPa to about 5,000 kPa, or about 1,000 kPa to about 5,000 kPa at a temperature of 25 °C. A tensile strength in a particular direction may be measured by stretching a sample at a speed of 5 mm/min in the particular direction until fracture utilizing a texture analyzer (e.g. TA.XT plus manufactured by Stable Micro Systems), and measuring the largest stress applied at fracture in a stress-strain curve. The dry electrode film may have a tensile strength in such a range (e.g., the range described above), the structural stability of the dry electrode film may be improved. In some embodiments, the dry electrode film may maintain a stable three-dimensional conductive network during a charging or discharging process so that the reversibility of an electrode reaction may be improved. The dry electrode film may have a high tensile strength in such a range (e.g., the range described above), the mechanical strength of the dry electrode film may be improved. The dry electrode film may have improved mechanical strength, and thus local deterioration due to a volume change during charging or discharging of an electrode including the dry electrode film and a lithium battery including the same may be suppressed or reduced. In some embodiments, the cycle characteristics of a lithium battery may be improved.

In one or more embodiments, the dry electrode film may further include, for example, a sacrificial electrode material. In some embodiments, lithium included in the dry electrode film may be irreversibly consumed in forming a solid electrolyte film (SEI) formed on a surface of an electrode active material during initial charging of a lithium battery including the dry electrode film. In some embodiments, the content (e.g., amount) of an electrode active material usable for an actual electrode reaction may be reduced as compared with theoretical capacity of the electrode active material included in a dry electrode film. The dry electrode film may include the sacrificial electrode material so that the loss of the electrode active material may be prevented or reduced and the reversibility of a lithium battery may be improved. In some embodiments, the cycle characteristics of a lithium battery may be improved. The sacrificial electrode material may be utilized to form the SEI formed on the surface of the electrode active material during initial charging of a lithium battery, thereby suppressing the irreversible consumption of lithium included in the electrode active material. The sacrificial electrode material may be, for example, a material of which initial charge/discharge efficiency is 50 % or less of initial charge/discharge efficiency of the electrode active material when a lithium battery is initially charged or discharged under the same conditions as the electrode active material. For example, the initial charge/discharge efficiency of the electrode active material may be about 90 %, and the initial charge/discharge efficiency of the sacrificial electrode material may be 45 % or less. The sacrificial electrode material may include, for example, $Li_2O$, $Li_2O_2$, $Li_2S$, $Li_3N$, $LiN_3$, $LiF$, $Li_5FeO_4$, $Li_2NiO_2$, $Li_6CoO_4$, $Li_2MoO$, or one or more combinations thereof.

The providing of the dry mixture including the dry electrode active material and the dry binder will be described in more detail.

For example, the dry electrode active material and the dry binder may be dry-mixed to prepare the dry mixture. In some embodiments, a separately prepared dry mixture may be obtained and utilized without any change.

For example, the dry electrode active material, the dry conductive material, and the dry binder may be dry-mixed to prepare the dry mixture. The dry electrode active material may include the first electrode active material and the second electrode active material.

The dry-mixing refers to that mixing is performed in a state in which a process solvent is not included. The process solvent may be, for example, a solvent utilized in preparing an electrode slurry. The process solvent may be, for example, water, N-methyl pyrrolidone (NMP), and/or the like, but embodiments of the present disclosure are not limited thereto. A material is not included as long as the material is a process solvent utilized in preparing an electrode slurry. The dry-mixing may be performed at a rotational speed of about 10 rpm to about 10,000 rpm at a temperature of about 15 °C to about 65 °C by utilizing a stirrer. The dry-mixing may be performed for about 1 minute to about 200 minutes by utilizing the stirrer.

In some embodiments, the dry-mixing may be performed, for example, twice or more. First, the dry electrode active material, the dry conductive material, and the dry binder may be primarily dry-mixed to prepare a first dry mixture. The primary dry-mixing may be performed, for example, at a rotational speed of about 10 rpm to about 2,000 rpm at a temperature of about 25 °C to about 65 °C for 15 minutes or less. Subsequently, the first dry mixture may be additionally secondarily dry-mixed to prepare a second dry mixture. The secondary dry-mixing may be performed, for example, at a rotational speed of about 3,000 rpm to about 9,000 rpm at a temperature of about 25 °C to about 65 °C for about 10 minutes to about 60 minutes. The dry mixture including a fibrillized dry binder may be obtained through the secondary dry-mixing.

The stirrer may be, for example, a kneader. The stirrer may include, for example, a chamber, at least one rotating shaft disposed inside the chamber to rotate, and a blade rotatably coupled to the rotating shaft and disposed in a length direction of the rotating shaft. The blade may be, for example, at least one selected from among a ribbon blade, a sigma blade, a Z blade, a dispersion blade, and a screw blade. By including the blade, without a solvent, the dry electrode active material, the dry conductive material, and the dry binder may be effectively mixed to prepare a dough-like mixture.

Non-limiting examples of the dry binder may include vinylidene fluoride/hexafluoropropylene copolymer, polyvinylidene fluoride, polyacrylonitrile, polymethyl methacrylate, PTFE, a mixture of the above polymers, an SBR-based polymer, and/or the like. The dry binder may be selected from dry binders utilized in the above-described dry electrode film.

Non-limiting examples of the dry conductive material may include at least one selected from among Denka black, carbon black, graphite particles, natural graphite, artificial graphite, acetylene black, Ketjen black, and a carbon fiber; carbon nanotubes; a metal powder, a metal fiber, and a metal tube of copper, nickel, aluminium, or silver; and a conductive polymer such as a polyphenylene derivative, but embodiments of the present disclosure are not limited thereto. Any material utilized as a conductive material in the art may be utilized. In some embodiments, the conductive material may be, for example, a carbon-based conductive material. The dry conductive material may be selected from dry conductive materials utilized in the above-described dry electrode film.

In some embodiments, a plasticizer or a pore former may be further added to the dry mixture to form pores in an electrode plate.

The contents of the dry electrode active material, the dry binder, and the dry conductive material utilized in the dry electrode film may be at levels commonly utilized in a lithium battery.

In a dry cathode film, a dry cathode active material may be utilized as a dry cathode active material. The dry cathode active material may be as defined in the above-described dry electrode film. In a dry anode film, a dry anode active material may be utilized as a dry anode active material.

Next, the processing of the dry mixture into the dry electrode film by utilizing the rolling device which includes the first calender roll having the first rotational speed and the second calender roll having the second rotational speed will be described in more detail.

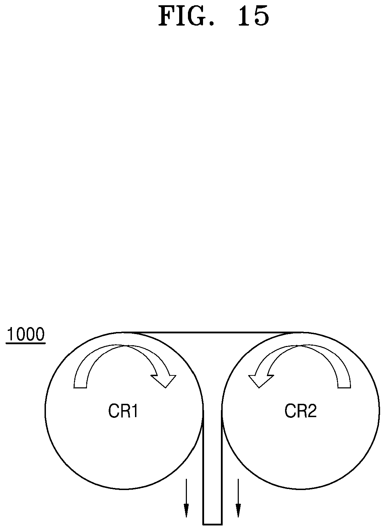

Referring to FIG. 15, a rolling device 1000 may include a first calender roll CR1 and a second calender roll CR2. The first calender roll CR1 and the second calender roll CR2 may rotate in opposite directions. For example, the first calender roll CR1 may rotate clockwise, and the second calender roll CR2 may rotate counterclockwise. The first calender roll CR1 may rotate at a first rotational speed, the second calender roll CR2 may rotate at a second rotational speed. For example, a ratio of the first rotational speed to the second rotational speed may exceed 1:1. In one or more embodiments, the ratio of the first rotational speed of the first calender roll CR1 to the second rotational speed of the second calender roll CR2 may be, for example, in a range of about 1:1.5 to about 1:6, about 1:1.8 to about 1:6, about 1:2 to about 1:6, about 1:3 to about 1:6, or about 1:4 to about 1:6. In some embodiments, a gear ratio of a first gear of the first calender roll CR1 to a second gear of the second calender roll CR2 may be, for example, in a range of about 1.5:1 to about 6:1, about 1.8:1 to about 6:1, about 2:1 to about 6:1, about 3:1 to about 6:1, or about 4:1 to about 6:1.

The first rotational speed and the second rotational speed may have such a ratio (e.g., a ratio described above) so that an area occupied by the first electrode active material on the surface of the dry electrode film may increase and the surface porosity of the dry electrode film may increase. In some embodiments, the cycle characteristics of a lithium battery including such a dry electrode film, for example, the high-rate characteristics thereof, may be improved.

Within a range that satisfies the above ratio of the first rotational speed to the second rotational speed, a range of each of the first rotational speed of the first calender roll CR1 and the second rotational speed of the second calender roll CR2 is not limited and may be adjusted according to the required standard and/or the like of the dry electrode film. The first rotational speed of the first calender roll CR1 may be, for example, in a range of about 1 mm/s to about 150 mm/s. The second rotational speed of the second calender roll CR2 may be, for example, in a range of 5 mm/s to about 200 mm/s. If (e.g., when) the rotational speed of the calender roll is excessively reduced, it may be difficult to provide a dry electrode film having substantially uniform physical properties. If (e.g., when) the rotational speed of the calender roll is excessively increased, a possibility of cracks occurring in the dry electrode film may be increased.

A first interval between the first calender roll CR1 and the second calender roll CR2 may be adjusted in consideration of the required thickness, packing density, and/or the like of the dry electrode film. In one or more embodiments, the rolling device 1000 may further include other members such as additional rollers and supports in addition to the first and second calender rolls CR1 and CR2. In FIG. 15, the first interval between the first calender roll CR1 and the second calender roll CR2 may be, for example, a shortest distance between a right side surface of the first calender roll CR1 and a left side surface of the second calender roll CR2.

In some embodiments, the processing of the dry mixture into the dry electrode film by utilizing the rolling device which includes the first calender roll having the first rotational speed and the second calender roll having the second rotational speed may include, for example, allowing the dry mixture to pass a first roller, which may include the first calender roll CR1 having the first rotational speed and the second calender roll CR2 having the second rotational speed, to prepare a first dry electrode film, allowing the first dry electrode film to pass, a second roller, which may include a third calender roll CR3 having a third rotational speed and a fourth calender roll CR4 having a fourth rotational speed, to prepare a second dry electrode film, and rolling the second dry electrode film. The rolling device may additionally include a third roller, a fourth roller, and/or the like.

In the preparing of the second dry electrode film, a ratio of the third rotational speed to the fourth rotational speed may be, for example, 1:1. A second interval between the third calender roll CR3 and the fourth calender roll CR4 may be shorter than the first interval between the first calender roll CR1 and the second calender roll CR2. The second interval may be 99 % or less, 98 % or less, 95 % or less, or 90 % or less of the first interval. The first interval and the second interval may each independently be, for example, in a range of about 50 $\mu$m to about 300 $\mu$m, about 50 $\mu$m to about 200 $\mu$m, about 50 $\mu$m to about 150 $\mu$m, or about 70 $\mu$m to about 130 $\mu$m.

In the rolling of the second dry electrode film, the rolling may be performed by utilizing a roll press, a plate press, and/or the like, but embodiments of the present disclosure are not limited thereto. Any method utilized in the art may be utilized.

A dry electrode according to one or more embodiments may include an electrode current collector, and the dry electrode film disposed on at least one surface (e.g., one surface or two opposite surfaces) of the electrode current collector and prepared through the above-described method of preparing a dry electrode film. In the dry electrode, the dry electrode film may correspond to an electrode active material layer.

The dry electrode may include the above-described dry electrode film so that an electrolyte impregnability of the dry electrode may be improved and the mechanical properties thereof may be improved.

The above-described dry electrode film may be on (e.g., disposed on) one surface or two opposite surfaces of the electrode current collector. For example, the above-described dry electrode film may be laminated on one surface or two opposite surfaces of the electrode current collector.

In one or more embodiments, two surfaces of the dry electrode film may have, for example, different surface porosities. The dry electrode film may include, for example, a first surface and a second surface opposite to the first surface, and a porosity of the first surface may be different from a porosity of the second surface. In the dry electrode film, for example, the porosity of the first surface (e.g. a surface facing the second calender roll, which rotates at a speed faster than the first calender roll) may be higher than the porosity of the second surface (e.g. a surface facing the first calender roll, which rotates at a speed slower than the second calender roll). The dry electrode film may include the first surface and the second surface. The second surface having lower porosity may be disposed on the electrode current collector, and the first surface having higher porosity may be spaced apart from the electrode current collector. In one or more embodiments, the first surface of the dry electrode film having higher porosity may be disposed to become, for example, a top surface of the electrode active material layer. An area occupied by pores and measured from a scanning electron microscope image of a surface of the dry electrode film may be, for example, in a range of about 8 % to about 30 % of the total area of the first surface of the dry electrode film. The area occupied by the pores on the first surface of the dry electrode film may be 8 % or more, and thus the porosity of the first surface may be increased, thereby improving the electrolyte impregnability of the dry electrode. A surface porosity P1 of the dry electrode film may be, for example, in a range of about 8 % to about 30 %, about 8 % to about 25 %, about 8 % to about 20 %, or about 8 % to about 15 %. A ratio of the area occupied by the pores to the total area of the surface of the dry electrode film may be in such a range (e.g., the range described above) so that the surface porosity of the dry electrode film may be improved and the electrolyte impregnability thereof may be improved. In some embodiments, the cycle characteristics of a lithium battery including such a dry electrode film, for example, the high-rate characteristics thereof, may be improved.

In one or more embodiments, the electrode current collector may include, for example, a substrate.

As a material constituting the substrate, any material, which does not react with lithium, for example, any material, which does not form an alloy or a compound with lithium and has conductivity (e.g., is a conductor), may be utilized. The substrate may include, for example, a metal and/or an alloy. The substrate may include, for example, indium (In), copper (Cu), magnesium (Mg), stainless steel (SUS), titanium (Ti), iron (Fe), cobalt (Co), nickel (Ni), zinc (Zn), aluminium (Al), germanium (Ge), or an alloy thereof. The substrate may have a form selected from, for example, a sheet, a foil, a film, a plate, a porous body, a mesoporous body, a through-hole-containing body, a polygonal ring body, a mesh body, a foam body, and a nonwoven body, but embodiments of the present disclosure are not necessarily limited to the form. Any form utilized in the art may be utilized.

In one or more embodiments, the electrode current collector may include, for example, the substrate; and an interlayer between the substrate and the dry electrode film. The interlayer may include, for example, a carbon-based conductive material.

The interlayer may be directly disposed, for example, on one surface or two surfaces of the substrate. In some embodiments, other layers may not be disposed between the substrate and the interlayer. The interlayer may be directly on one surface or two surfaces of the substrate, thereby further improving a binding force between the substrate and the dry electrode film.

A thickness of the interlayer may be, for example, in a range of about 0.01 % to about 30 %, about 0.1 % to about 30 %, about 0.5 % to about 30 %, about 1 % to about 25 %, about 1 % to about 20 %, about 1 % to about 15 %, about 1 % to about 10 %, about 1 % to about 5 %, or about 1 % to about 3 % of a thickness of the substrate. The thickness of the interlayer may be, for example, in a range of about 10 nm to about 5 $\mu$m, about 50 nm to about 5 $\mu$m, about 200 nm to about 4 $\mu$m, about 500 nm to about 3 $\mu$m, about 500 nm to about 2 $\mu$m, about 500 nm to about 1.5 $\mu$m, or about 700 nm to about 1.3 $\mu$m. The interlayer may have a thickness in such a range (e.g., the ranges described above) so that a binding force between the substrate and the dry electrode film may be further improved and an increase in interfacial resistance may be suppressed or reduced.

The interlayer may include, for example, a carbon-based conductive material. The carbon-based conductive material included in the interlayer may be selected from carbon-based conductive materials utilized in a dry electrode film. The interlayer may include a carbon-based conductive material that is identical to the carbon-based conductive material utilized in the dry electrode film. The interlayer may include the carbon-based conductive material and thus may be, for example, a conductive layer.

In some embodiments, the interlayer may additionally include, for example, a binder. A binding force between the substrate and the dry electrode film may be further improved because of the interlayer additionally including the binder. The binder included in the interlayer may be, for example, a conductive binder and/or a nonconductive binder. The conductive binder may include, for example, an ion-conductive binder and/or an electron-conductive binder. A binder having both (e.g., simultaneously) ion conductivity and electron conductivity may belong to an ion-conductive binder and may also belong to an electron-conductive binder.

The binder included in the interlayer may be selected from binders utilized in a dry electrode film. The interlayer may include a binder that is identical to the binder utilized in the dry electrode film. The binder included in the interlayer may be, for example, a fluorine-based binder. The fluorine-based binder included in the interlayer may include, for example, PVDF. The interlayer layer may be, for example, a binding layer including a binder. The interlayer may be, for example, a conductive layer including a binder and a carbon-based conductive material.

The interlayer may be on (e.g., disposed on) the substrate, for example, in a dry type or kind or wet type or kind. In some embodiments, the interlayer may be disposed on the substrate in a dry type or kind, for example, through deposition such as chemical vapor deposition (CVD) or physical vapor deposition (PVD). In some embodiments, the interlayer may be disposed on the substrate in a wet type or kind, for example, through spin coating, dip coating, and/or the like. In some embodiments, the interlayer may be disposed on the substrate by, for example, depositing a carbon-based conductive material on the substrate through deposition. The interlayer applied through dry coating may be made of a carbon-based conductive material and may not include(e.g., may exclude) any binder. In some embodiments, the interlayer may be disposed on the substrate by, for example, coating a surface of the substrate with a composition including a carbon-based conductive material, a binder, and a solvent and drying the composition. The interlayer may have a single-layer structure or a multi-layer structure including a plurality of layers. The multi-layer structure may be a two-layer structure, a three-layer structure, a four-layer structure, and/or the like.

In one or more embodiments, the electrode current collector may include, for example, a base film and a metal layer on one surface or two surfaces of the base film. In some embodiments, the electrode current collector may include a substrate, and the substrate may have a structure including, for example, a base film and a metal layer on one surface or two surfaces of the base film. The above-described interlayer may be additionally disposed on the metal layer. The base film may include, for example, a polymer. The polymer may be, for example, a thermoplastic polymer. The polymer may include, for example, polyethylene terephthalate (PET), PE, PP, polybutylene terephthalate (PBT), polyimide (PI), or any combination thereof. The base film may include the thermoplastic polymer, and thus when a short circuit occurs, the base film may be melted to suppress or reduce a rapid increase in current. The base film may be, for example, an insulator. The metal layer may thee, for example, copper (Cu), stainless steel, titanium (Ti), iron (Fe), cobalt (Co), nickel (Ni), or an alloy thereof. The metal layer may serve as an electrochemical fuse to be cut when an overcurrent occurs, thereby performing a short circuit prevention function. A thickness of the metal layer may be adjusted to adjust a limit current and a maximum current. The metal layer may be plated or deposited on the base film. The metal layer may have a thickness of 3 μm, about 0.01 μm to about 3 μm, about 0.1 μm to 2 μm, or about 0.1 μm to about 1 μm. The metal layer may have a thickness in such a range (e.g., the range described above), the stability of an electrode assembly may be secured while conductivity is maintained. A metal chip may have, for example, a thickness of about 2 μm to about 10 μm, about 2 μm to about 7 μm, or about 4 μm to about 6 μm. The metal chip may have a thickness in such a range (e.g., the range described above), and thus the metal layer and a lead tab may be more easily connected. The electrode current collector may have such a structure, and thus a weight of an electrode may be reduced, thereby improving an energy density. In some embodiments, the electrode current collector may be, for example, a cathode current collector. In some embodiments, the electrode current collector may be, for example, an anode current collector.

The dry electrode film included in the dry electrode may correspond to an electrode active material layer.

If (e.g., when) the electrode active material layer of the dry electrode (for example, the dry electrode film) is measured by utilizing a surface and interfacial measuring analysis system (SAICAS), a change ratio of a vertical relative binding force $F_{VR}$ according to a depth from a first point spaced apart from a surface of the electrode active material layer by 5 % in a direction of the electrode current collector to a second point spaced apart from a surface of the electrode current collector by 5 %, with respect to the total thickness of the electrode active material layer, may be, for example, 300 % or less. In one or more embodiments, the change ratio of the vertical relative binding force may be, for example, in a range of about 10 % to about 300 %, about 10 % to about 250 %, about 10 % to about 200 %, about 10 % to about 150%, or about 10 % to about 100 %. The second point spaced apart from the surface of the electrode current collector in the direction of the electrode active material layer by 5 % may correspond to a point spaced apart from the surface of the electrode active material layer in the direction of the electrode current collector by 95 % with respect to the total thickness of the electrode active material layer. A vertical relative binding force may be calculated from Equation 1. For example, Evaluation Example 2 may be referenced for a SAICAS measurement method.

change ratio of vertical relative binding force $F_{VR}$ = [(maximum value $F_{VR1}$ of vertical relative binding force - minimum value $F_{VR2}$ of vertical relative binding force)/minimum value $F_{VR2}$ of vertical relative binding force)] $\times$ 100          equation 1

In the electrode active material layer of the dry electrode, If (e.g., when) measurement is performed by utilizing the SAICAS, the change ratio of the vertical relative binding force $F_{VR}$ may be 300 % or less, and thus the uniformity of the distribution of components in an electrode may be improved. In some embodiments, side reactions and an increase in internal resistance due to non-uniform distribution of the components in the electrode active material layer may be suppressed or reduced, thereby improving the reversibility of electrode reactions. The cycle characteristics of a lithium battery may be improved even if (e.g., when) an electrode has high loading.

If (e.g., when) SAICAS measurement is performed in the electrode active material of the dry electrode, a horizontal binding force ratio of a second horizontal binding force $F_{HA2}$ at a second point spaced apart from the surface of the electrode current collector in the direction (for example, a depth direction) of the electrode active material layer by 10 % to a first horizontal binding force $F_{HA1}$ at a first point spaced apart from the surface of the electrode active material layer in the direction of the electrode current collector by 10 %, with respect to the total depth from the surface of the electrode active material layer to the surface of the electrode current collector, may be, for example, 50 % or more. In some embodiments, the horizontal binding force ratio may be, for example, in a range of about 50 % to about 100 %, about 60 % to about 100 %, about 70 % to about 100 %, about 80 % to about 100 %, or about 90 % to about 100 %. The second point spaced apart from the surface of the electrode current collector in the direction of the electrode active material layer by 10 % may correspond to a point spaced apart from the surface of the electrode active material layer in the direction of the electrode current collector by 90 % with respect to the total thickness of the electrode active material layer. The horizontal binding force ratio may be represented, for example, by Equation 2. Evaluation Example 3 may be referenced, for example, for a SAICAS measurement method.

$$\text{horizontal binding force ratio} = [\text{second horizontal binding force } F_{H2}/\text{first horizontal binding force } F_{H1}] \times 100 \qquad \text{equation 2}$$

If (e.g., when) SAICAS measurement is performed, the horizontal binding force ratio may be 50 % or more, and thus the uniformity of the distribution of components in an electrode may be further improved. The dry electrode may have a horizontal binding force ratio in such a range (e.g., the range described above), the cycle characteristics of a lithium battery adopting such a dry electrode may be further improved.

In one or more embodiments, the dry electrode may be, for example, a dry anode. The dry anode may include a dry anode film, and the dry anode film may include a dry anode active material.

Any anode active material may be utilized as long as the anode active material is utilized as an anode active material of a lithium battery in the art. The anode active material may include, for example, at least one selected from among a lithium metal, a metal alloyable with lithium, a transition metal oxide, a non-transition metal oxide, and a carbon-based material. Non-limiting examples of the metal alloyable with lithium may include Si, Sn, Al, Ge, Pb, Bi, Sb, a Si-X alloy (wherein X is an alkali metal, an alkali earth metal, a Group 13 element, a Group 14 element, a transition metal, a rare earth element, or a combination thereof and is not Si), a Sn-X alloy (wherein Y is an alkali metal, an alkali earth metal, a Group 13 element, a Group 14 element, a transition metal, a rare earth element, or a combination thereof and is not Sn), and/or the like. Element X may include, for example, Mg, Ca, Sr, Ba, radium (Ra), Sc, Y, Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, Ag, Au, Zn, Cd, B, Al, Ga, Sn, In, Ti, Ge, P, As, Sb, Bi, S, Se, Te, polonium (Po), or one or more combinations thereof (e.g. Mg, Ca, Sr, Ba, Sc, Y, Ti, Zr, hafnium (Hf), V, Nb, tantalum (Ta), Cr, Mo, W, rhenium (Re), Fe, Pb, ruthenium (Ru), osmium (Os), rhodium (Rh), iridium (Ir), palladium (Pd), platinum (Pt), Cu, Ag, Au, Zn, Cd, B, Al, Ga, Sn, In, Ti, Ge, P, As, Sb, Bi, S, Se, Te, or one or more combinations thereof). The transition metal oxide may be, for example, lithium titanium oxide, vanadium oxide, lithium vanadium oxide, and/or the like. The non-transition metal oxide may be, for example, $SnO_2$, $SiO_x$ (wherein $0<x\leq2$), and/or the like. The carbon-based material may be, for example, crystalline carbon, amorphous carbon, or a mixture thereof. The crystalline carbon may be, for example, graphite such as non-shaped (e.g., irregularly shaped), plate-shaped, flake-shaped, spherical, or fibrous natural graphite or artificial graphite. The amorphous carbon may be, for example, soft carbon (low-temperature fired carbon) or hard carbon, mesophase pitch carbide, fired coke, and/or the like.

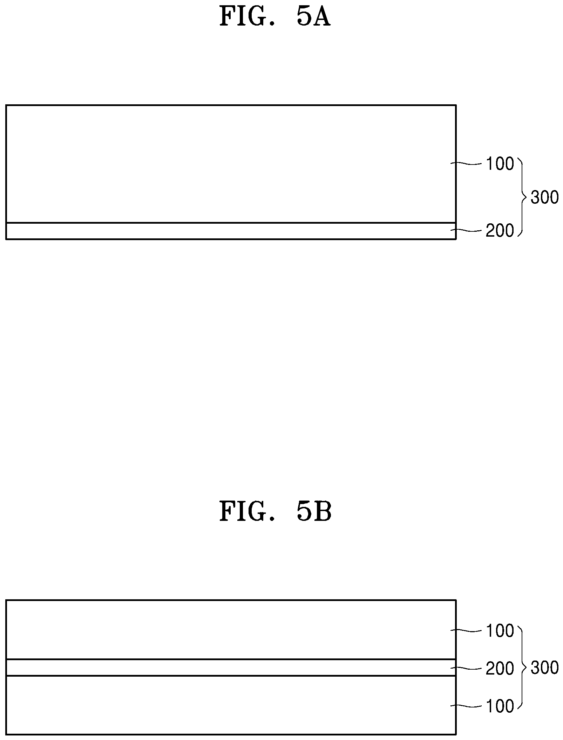

Referring to FIG. 5A, an electrode 300 according to one or more embodiments may include an electrode current collector 200 and an electrode active material layer 100 on one surface of the electrode current collector 200, wherein the electrode active material layer 100 may include a first electrode active material, a second electrode active material, and a binder. The electrode 300 may be, for example, a dry electrode. For example, the first electrode active material and the second electrode active material may each be a dry electrode active material, and the binder may be a dry binder. The electrode active material layer 100 may be, for example, the dry electrode film prepared through the above-described method of preparing a dry electrode film.

Referring to FIG. 5B, an electrode 300 according to one or more embodiments may include an electrode current collector 200 and electrode active material layers 100 on two surfaces (e.g., two opposite surfaces) of the electrode current collector 200, wherein the electrode active material layer 100 may include a first electrode active material, a second electrode active material, and a binder. The electrode 300 may be, for example, a dry electrode. For example, the first electrode active material and the second electrode active material may each be a dry electrode active material, and the binder may be a dry binder. The electrode active material layer 100 may be, for example, the dry electrode film prepared through the above-described method of preparing a dry electrode film.

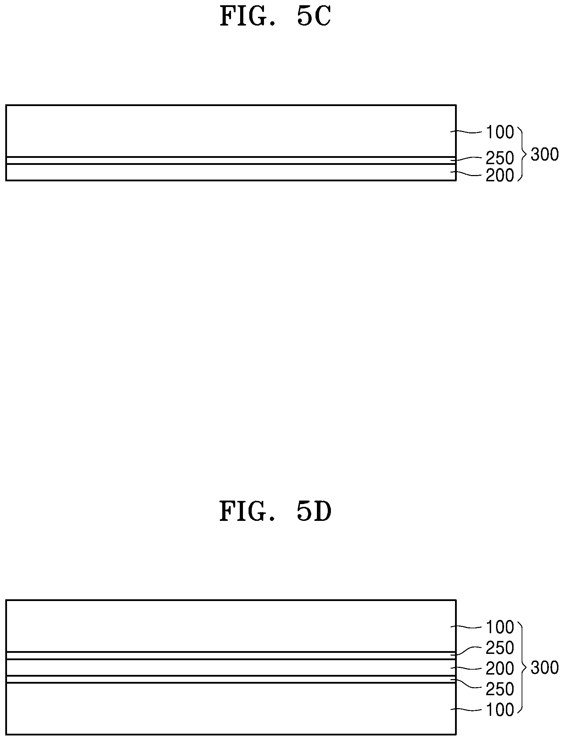

Referring to FIG. 5C, an electrode 300 according to one or more embodiments may include an electrode current collector 200 and an electrode active material layer 100 on one surface of the electrode current collector 200, wherein the electrode active material layer 100 may include a first electrode active material, a second electrode active material, and a binder, and the electrode 300 may include a coating layer 250 between the electrode active material layer 100 and the electrode current collector 200. The electrode 300 of FIG. 5C may have substantially the same configuration as the electrode 300 of FIG. 5A except that the coating layer 250 is additionally included. The electrode 300 may further include the coating layer 250, and thus a binding force between the electrode active material layer 100 and the electrode current collector 200 may be improved. The electrode active material layer 100 may be, for example, the dry electrode film prepared through the above-described method of preparing a dry electrode film.

Referring to FIG. 5D, an electrode 300 according to one or more embodiments may include an electrode current collector 200 and electrode active material layers 100 on two surfaces (e.g., two opposite surfaces) of the electrode current collector 200, wherein the electrode active material layer 100 may include a first electrode active material, a second electrode active material, and a binder, and the electrode 300 may include a coating layer 250 between each of the electrode active material layers 100 and the electrode current collector 200. The electrode 300 of FIG. 5D may have substantially the same configuration as the electrode 300 of FIG. 5B except that the coating layers 250 are additionally included. The electrode 300 may further include the coating layer 250, and thus a binding force between the electrode active material layer 100 and the electrode current collector 200 may be improved. The electrode active material layer 100 may be, for example, the dry electrode film prepared through the above-described method of preparing a dry electrode film.

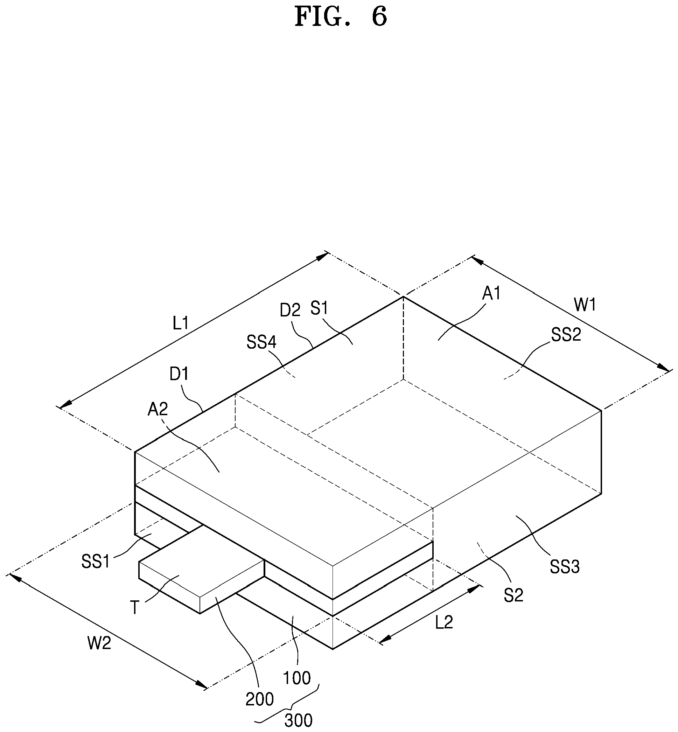

Referring to FIG. 6, in the electrode 300 according to one or more embodiments, the electrode active material layer 100 may have a first surface S1 and a second surface S2 opposite to the first surface S1, may have a first side surface SS1 connected to ends of the first surface S1 and the second surface S2 in a length direction and a second side surface SS2 opposite to the first side surface SS1, and may have a third side surface SS3 connected to ends of the first surface S1 and the second surface S2 in a width direction and a fourth side surface SS4 opposite to the third side surface SS3. A first domain D1 may be a domain which is defined by the first surface S1, the second surface S2, the third side surface SS3, and the fourth side surface SS4 and may include the electrode current collector 200 disposed between the first surface S1 and the second surface S2. A second domain D2 may be a domain which is defined by the first surface S1, the second surface S2, the third side surface SS3, and the fourth side surface SS4 and in which the electrode current collector 200 is absent between the first surface S1 and the second surface S2. The electrode active material layer 100 may be, for example, the dry electrode film prepared through the above-described method of preparing a dry electrode film.

Referring to FIG. 6, the electrode active material layer 100 may have a first area A1 defined by a first distance L1 in the length direction and a first distance W1 in the width direction, the electrode current collector 200 may be disposed between the first surface S1 and the second surface S2 and may have a second area A2 defined by a second distance L2 in the length direction and a second distance W2 in the width direction, and the second area A2 of the electrode current collector 200 may be 90 % or less of the first area A1 of the electrode active material layer 100. For example, in one or more embodiments, the second area A2 of the electrode current collector 200 may be in a range of about 10 % to about 90 %, about 10 % to about 80 %, about 10 % to about 70 %, about 10 % to about 60 %, about 10 % to about 50 %, about 10 % to about 40 %, about 10 % to about 30 %, or about 10 % to about 20 % of the first area A1 of the electrode active material layer 100. An area of the electrode current collector 200 in the electrode 300 may be smaller than that of the electrode active material layer 100, and thus the energy density of a lithium battery adopting such an electrode 300 may be further improved.

Referring to FIG. 6, the second distance L2 of the electrode current collector 200 in the length direction may be 90 % or less of the first distance L1 of the electrode active material layer 100 in the length direction. For example, in one or more embodiments, the second distance L2 of the electrode current collector 200 in the length direction may be in a range of about 10 % to about 90 %, about 10 % to about 80 %, about 10 % to about 70 %, about 10 % to about 60 %, about 10 % to about 50 %, about 10 % to about 40 %, about 10 % to about 30 %, or about 10 % to about 20 % of the first distance L1 of the electrode active material layer 100 in the length direction. In some embodiments, the second distance W2 of the electrode current collector 200 in the width direction may be 90 % or less of the first distance W1 of the electrode active material layer 100 in the width direction. For example, in some embodiments, the second distance W2 of the electrode current collector 200 in the width direction may be about 10 % to about 90 %, about 10 % to about 80 %, about 10 % to about 70 %, about 10 % to about 60 %, about 10 % to about 50 %, about 10 % to about 40 %, about 10 % to about 30 %, or about 10 % to about 20 % of the first distance W1 of the electrode active material layer 100 in the width direction. For example, in some embodiments, the second distance L2 of the electrode current collector 200 in the length direction may be 90 % or less of the first distance L1 of the electrode active material layer 100 in the length direction, and the second distance W2 of the electrode current collector 200 in the width direction may be 90 % or less of the first distance W1 of the electrode active material layer 100 in the width direction. The electrode current collector 200 may have such a size, the energy density of a lithium battery 1000 including such an electrode 300 may be further improved.

Referring to FIG. 6, the electrode current collector 200 may be exposed on up to three side surfaces of the first side surface SS1, the second side surface SS2, the third side surface SS3, and the fourth side surface SS4 included in the electrode active material layer 100. In one or more embodiments, the electrode current collector 200 may have a smaller area than that of the electrode active material layer 100, and thus the electrode current collector 200 may be exposed on some side surfaces of the side surfaces included in the electrode active material layer 100, for example, three side surfaces, two side surfaces, or one side surface. The number of side surfaces of the electrode active material layer 100, on which the electrode current collector 200 is exposed, may be decreased, and thus a possibility of a short circuit occurring through the side surfaces of the electrode active material layer 100 may be reduced, thereby improving the safety of the lithium battery 1000.

Referring to FIG. 6, in one or more embodiments, the electrode current collector 200 may further include a tab T extending to the outside of the electrode active material layer 100 through up to two side surfaces selected from the first side surface SS1, the second side surface SS2, the third side surface SS3, and the fourth side surface SS4. For example, in some embodiments, the tab T may extend to the outside of the electrode active material layer 100 through the first side surface SS1 and/or the second side surface SS2. In some embodiments, the tab T may extend to the outside of the electrode active material layer 100 through the third side surface SS3 and/or the fourth side surface SS4. The tab T may extend to the outside of the electrode active material layer 100 through one side surface or two opposite side surfaces, and thus a short circuit caused by a plurality of adjacent tabs T may be prevented or reduced.

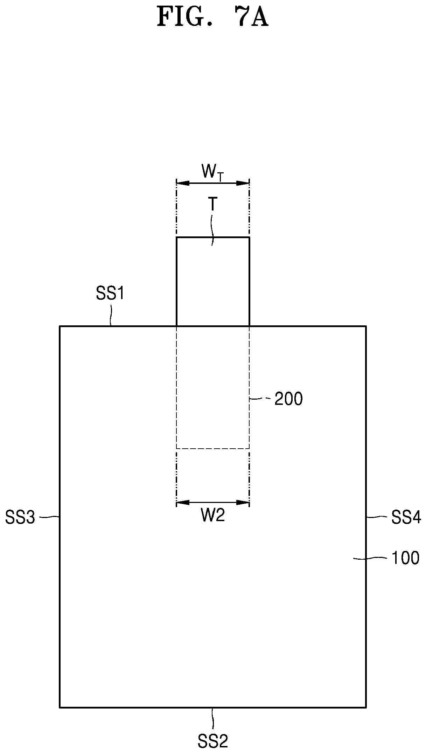

Referring to FIGs. 7A to 7F, an electrode current collector 200 disposed at a portion between two surfaces of an electrode active material layer 100 may have one or more suitable shapes and may be disposed at any one of one or more suitable positions in the electrode active material layer 100. In FIGs. 7A to 7F, a domain in which the electrode current collector 200 is disposed in the electrode active material layer 100 defined by a first side surface SS1, a second side surface SS2, a third side surface SS3, and a fourth side surface SS4 may correspond to a first domain D1, and a domain in which the electrode current collector 200 is not disposed may correspond to a second domain D2. The electrode active material layer 100 may be, for example, the dry electrode film prepared through the above-described method of preparing a dry electrode film.

Referring to FIG. 7A, in some embodiments, the electrode current collector 200 may be disposed at a portion of the electrode active material layer 100 defined by the first side surface SS1, the second side surface SS2, the third side surface SS3, and the fourth side surface SS4. The electrode current collector 200 may include a tab T exposed on the first side surface SS1 of the electrode active material layer 100 and extending to the outside of the electrode active material layer 100 through the first side surface SS1. A distance (e.g., a width) $W_T$ of the tab in a width direction may be about 100 % of a second distance W2 of the electrode current collector 200 in the width direction.

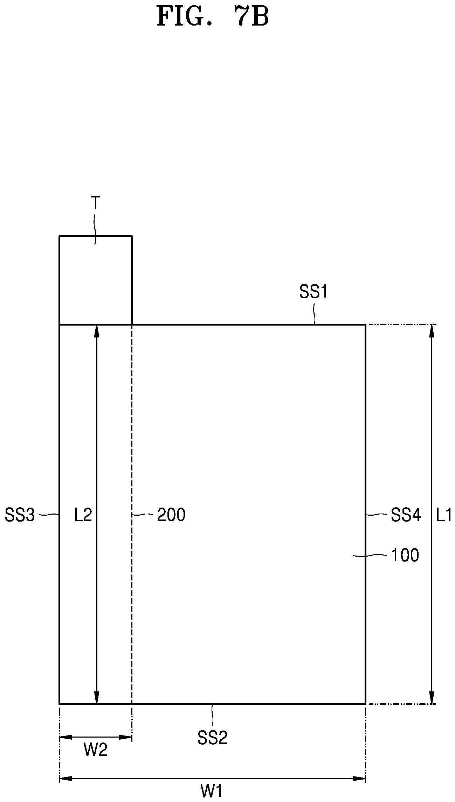

Referring to FIG. 7B, in some embodiments, the electrode current collector 200 may be disposed at a portion of the electrode active material layer 100 defined by the first side surface SS1, the second side surface SS2, the third side surface SS3, and the fourth side surface SS4. The electrode current collector 200 may be exposed on the first side surface SS1, the second side surface SS2, and the third side surface SS3 of the electrode active material layer 100 and may include a tab T extending to the outside of the electrode active material layer 100 through the first side surface SS1. A second distance L2 of the electrode current collector 200 in the length direction may be about 100 % of a first distance L1 of the electrode active material layer 100 in the length direction. A second distance W2 of the electrode current collector 200 in the width direction may be less than about 100 % of a first distance W1 of the electrode active material layer 100 in the width direction.

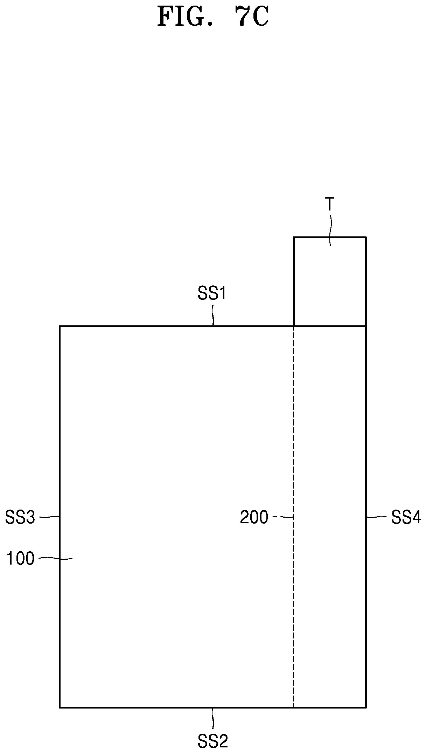

Referring to FIG. 7C, in some embodiments, the electrode current collector 200 may be disposed at a portion of the electrode active material layer 100 defined by the first side surface SS1, the second side surface SS2, the third side surface SS3, and the fourth side surface SS4. The electrode current collector 200 may be exposed on the first side surface SS1, the second side surface SS2, and the fourth side surface SS4 of the electrode active material layer 100 and may include a tab T extending to the outside of the electrode active material layer 100 through the first side surface SS1.

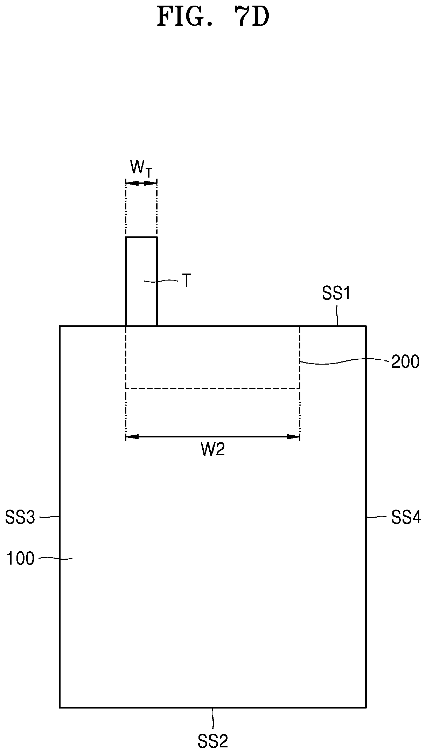

Referring to FIG. 7D, in some embodiments, the electrode current collector 200 may be disposed at a portion of the electrode active material layer 100 defined by the first side surface SS1, the second side surface SS2, the third side surface SS3, and the fourth side surface SS4. The electrode current collector 200 may be exposed on the first side surface SS1 of the electrode active material layer 100 and may include a tab T extending to the outside of the electrode active material layer 100 through the first side surface SS1. A distance (e.g., a width) $W_T$ of the tab in the width direction may be less than 100 % of the second distance W2 of the electrode current collector 200 in the width direction.

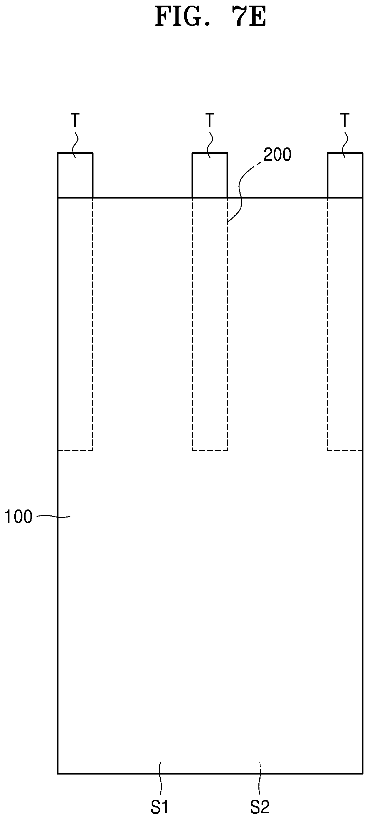

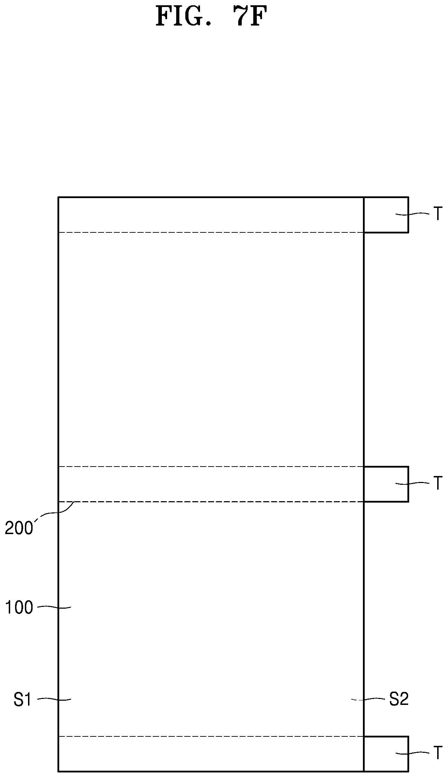

Referring to FIGs. 7E and 7F, in some embodiments, a plurality of electrode current collectors 200 may be disposed at portions of the electrode active material layer 100 defined by the first side surface SS1, the second side surface SS2, the third side surface SS3, and the fourth side surface SS4. In some embodiments, an electrode 300 may include a plurality of electrode current collectors 200 spaced apart from each other in the length direction or width direction of the electrode active material layer 100. The plurality of electrode current collectors 200 may be, for example, spaced and/or apart from each other by the same interval or different intervals. The plurality of electrode current collectors 200 may form an angle of about 45 degrees or less, about 40 degrees or less, about 30 degrees or less, about 25 degrees or less, about 20 degrees or less, about 15 degrees or less, about 10 degrees or less, or about 5 degrees or less with one surface of the electrode active material layer 100, for example, at least one of a first surface S1 or a second surface S2. For example, in some embodiments, the plurality of electrode current collectors 200 may form an angle of about 0 degrees with one surface of the electrode active material layer 100, for example, may be disposed in substantially parallel with one surface. In some embodiments, the plurality of electrode current collectors 200 may be disposed, for example, between the first surface S1 and the second surface S2 of the electrode active material layer 100.

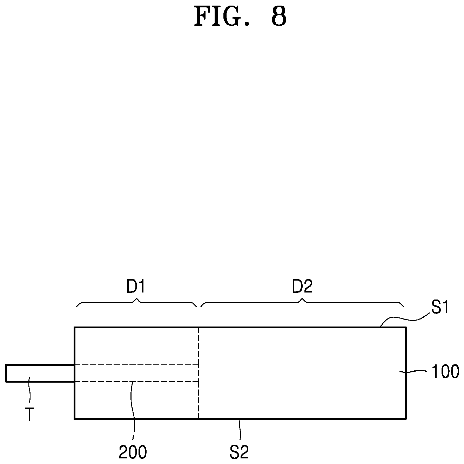

Referring to FIG. 8, in one or more embodiments, the electrode active material layer 100 may include a first domain D1 in which the electrode current collector 200 is disposed between the first surface S1 and the second surface S2, and a second domain D2 in which the electrode current collector 200 is not disposed (e.g., is not present) between the first surface S1 and the second surface S2. A mixture density of the electrode active material layer 100 included in the second domain D2 may be less than 99 %, 98 % or less, 97 % or less, 96 % or less, 95 % or less, or 90 % or less of a mixture density of the electrode active material layer 100 included in the first domain D1. For example, the mixture density of the electrode active material layer 100 included in the second domain D2 may be in a range of about 50 % to less than 99 %, about 60 % to about 98 %, about 70 % to about 97 %, about 80 % to about 96 %, or about 90 % to about 95 % of the mixture density of the electrode active material layer 100 included in the first domain D1.

A method of preparing a dry electrode according to one or more embodiments may be provided.

The method of preparing a dry electrode may include providing a dry electrode film, and arranging the dry electrode film on at least one surface (e.g., one surface or two opposite surfaces) of an electrode current collector.

First, the dry electrode film prepared through the above-described method of preparing a dry electrode film may be provided. Next, the electrode current collector in which an interlayer is on one surface or two surfaces (e.g., two opposite surfaces) of a substrate may be provided.

The providing of the electrode current collector in which the interlayer is on one surface or two surfaces of the substrate may include, for example, providing the substrate, and arranging the interlayer on one surface or two surfaces of the substrate.

The substrate of the electrode current collector may be as defined in the part of the above-described electrode current collector. A substrate of a cathode current collector may be, for example, aluminium foil. A substrate of an anode current collector may be, for example, copper foil.

The arranging of the interlayer on one surface or two surfaces of the substrate may include dry coating and/or wet coating. In the dry coating, for example, one surface or two surfaces of the electrode current collector may be coated with a carbon-based conductive material and/or a precursor thereof through deposition and/or the like. The deposition may be performed in a range of room temperature to high temperature at atmospheric pressure to a vacuum. If (e.g., when) the interlayer disposed through the dry coating is made of a carbon-based conductive material, the interlayer may not include (e.g., may exclude) any binder. In the wet coating, for example, on one surface or two surfaces of the electrode current collector may be coated with a composition including a carbon-based conductive material and a binder. The composition may include, for example, a carbon-based conductive material, a binder, and a process solvent. The carbon-based conductive material and the binder may be as defined in the part of the above-described electrode. The process solvent may be selected from solvents utilized in preparing an electrode slurry. The process solvent is removed through drying after the electrode current collector is coated with the composition. A coating method is not limited to spin coating, dip coating, and/or the like, and any coating method utilized in the art may be utilized.

Next, the dry electrode film may be disposed on one surface of the electrode current collector or may be concurrently (e.g., simultaneously) or sequentially disposed on two surfaces (e.g., two opposite surfaces) thereof to prepare a dry electrode.

Rolling may be added during and/or after the arranging of the dry electrode film on one surface or two surfaces of the electrode current collector.

The rolling may be, for example, roll pressing, flat pressing, and/or the like, but embodiments of the present disclosure are not necessarily limited thereto. A pressure during the rolling may be, for example, in a range of about 1.0 ton/cm$^2$ to about 10.0 ton/cm$^2$. If (e.g., when) the pressure during the rolling excessively increases, the electrode current collector may crack. If (e.g., when) the pressure during the rolling is excessively low, a binding force between the electrode current collector and the dry electrode film may be lowered. In some embodiments, the rolling may not be provided.

According to one or more embodiments, a lithium battery may include a first electrode, a second electrode, and an electrolyte between the first electrode and the second electrode, wherein the first electrode, the second electrode, or a combination thereof may be the above-described dry electrode.

The lithium battery may include the dry electrode having reduced internal resistance and improved mechanical properties, and thus the cycle characteristics of the lithium battery may be improved.

In one or more embodiments, the lithium battery may include, for example, a dry cathode, a dry anode, or a dry cathode and a dry anode. In some embodiments, the lithium battery may include, for example, a dry cathode and a wet anode or may include a wet cathode and a dry anode.

The lithium battery may include the electrolyte, and the electrolyte may include, for example, a liquid electrolyte, a solid electrolyte, a gel electrolyte, or one or more combinations thereof.

The liquid electrolyte may be, for example, an organic electrolyte. For example, a lithium salt may be dissolved in an organic solvent to prepare the organic electrolyte.

As the organic solvent, any material may be utilized as long as the material is utilized as an organic solvent in the art. Non-limiting examples of the organic solvent may include propylene carbonate, ethylene carbonate (EC), fluoroethylene carbonate, butylene carbonate, dimethyl carbonate (DMC), diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

As the lithium salt, any material may be utilized as long as the material is utilized as a lithium salt in the art. Non-limiting examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each a natural number), LiCl, LiI, or one or more mixtures (or combinations) thereof.

The solid electrolyte may include, for example, an inorganic solid electrolyte, an organic solid electrolyte, an organic-inorganic composite solid electrolyte, or a combination thereof.

In one or more embodiments, the solid electrolyte may include, for example, an oxide-based solid electrolyte, a sulfide-based solid electrolyte, a polymer-based solid electrolyte, or a combination thereof.

The solid electrolyte may include, for example, boron oxide, lithium oxynitride, and/or the like, but embodiments of the present disclosure are not limited thereto. Any material may be utilized as long as the material is utilized as a solid electrolyte in the art. The solid electrolyte may be formed on the anode through, for example, sputtering, or a separate solid electrolyte sheet may be stacked on the anode.

Non-limiting example of the oxide-based solid electrolyte may include $Li_{1+x+y}Al_xTi_{2-x}Si_yP_{3-y}O_{12}$ (wherein $0<x<2$ and $0\leq y<3$), $BaTiO_3$, $Pb(Zr,Ti)O_3$ (PZT), $Pb_{1-x}La_xZr_{1-y}Ti_yO_3$(PLZT (wherein $0\leq x<1$ and $0\leq y<1$), $Pb(Mg_3Nb_{2/3})O_3$-$PbTiO_3$ (PMN-PT), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (wherein $0<x<2$ and $0<y<3$), $Li_xAl_yTi_z(PO_4)_3$ (wherein $0<x<2$, $0<y<1$ and $0<z<3$), $Li_{1+x+y}(Al, Ga)_x(Ti, Ge)_{2-x}Si_yP_{3-y}O_{12}$ (wherein $0\leq x\leq 1$ and $0\leq y\leq 1$), $Li_xLa_yTiO_3$ (wherein $0<x<2$ and $0<y<3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (wherein M=Te, Nb, or Zr, and $0\leq x\leq 10$), $Li_{3+x}La_3Zr_{2-y}M_yO_{12}$ (M-doped LLZO) (wherein M=Ga, W, Nb, Ta, Al, or a combination thereof, $0\leq x\leq 10$, and $0<y<2$), $Li_7La_3Zr_{2-x}Ta_xO_{12}$ (LLZ-Ta) (wherein $0<x<2$), or one or more combinations thereof. In some embodiments, the oxide-based solid electrolyte may be, for example, a Garnet-type or kind solid electrolyte. The oxide-based solid electrolyte may be prepared through sintering and/or the like.

Non-limiting examples of the oxide-based solid electrolyte may further include $Li_7La_3Zr_2O_{12}$ (LLZO), $Li_{6.5}La_3Zr_{1.5}Ta_{0.5}O_{12}$, $Li_{1.3}Al_{0.3}Ti_{1.7}(PO_4)_3$, $Li_{0.34}La_{0.51}TiO_{2.94}$, $Li_{1.07}Al_{0.69}Ti_{1.46}(PO_4)_3$, $50Li_4SiO_4$-$50Li_2BO_3$, $90Li_3BO_3$-$10Li_2SO_4$, $Li_{2.9}PO_{3.3}N_{0.46}$, or one or more combinations thereof.

Non-limiting examples of the sulfide-based solid electrolyte may include at least one selected from among $Li_2S$-$P_2S_5$, $Li_2S$-$P_2S_5$-LiX (wherein X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (wherein m and n are each a positive number and Z is one or more of Ge, Zn, and Ga), $Li_2S$-$GeS_2$, $Li_2S$-$SiS_2$-$Li_3PO_4$, $Li_2S$-$SiS_2$-$Li_pMO_q$ (wherein p and q are each a positive number and M is one or more of P, Si, Ge, B, Al, Ga, and In), $Li_{7-x}PS_{6-x}Cl_x$ (wherein $0\leq x\leq 2$), $Li_{7-x}PS_{6-x}Br_x$ (wherein $0\leq x\leq 2$), and $Li_{7-x}PS_{6-x}I_x$ (wherein $0\leq x\leq 2$). The sulfide-based solid electrolyte may be prepared by treating a starting material such as $Li_2S$ or $P_2S_5$ through melt quenching or mechanical milling. In some embodiments, after such treating, heat treatment may be performed. The sulfide-based solid electrolyte may be in an amorphous state, a crystalline state, or a mixture state thereof.

In one or more embodiments, the sulfide-based solid electrolyte may include, for example, an argyrodite-type or kind solid electrolyte represented by Formula 9:

**Formula 9** $\quad\quad Li^+_{12-n-x}A^{n+}X^{2-}_{6-x}Y^-_x$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, $1\leq n\leq 5$, and $0\leq x\leq 2$.

In some embodiments, the sulfide-based solid electrolyte may be an argyrodite-type or kind compound including at least one selected from among $Li_{7-x}PS_{6-x}Cl_x$ (wherein $0\leq x\leq 2$), $Li_{7-x}PS_{6-x}Br_x$ (wherein $0\leq x\leq 2$), and $Li_{7-x}PS_{6-x}I_x$ (wherein $0\leq x\leq 2$). For example, in some embodiments, the sulfide-based solid electrolyte may be an argyrodite-type or kind compound including at least one selected from among $Li_6PS_5Cl$, $Li_6PS_5Br$, and $Li_6PS_5I$.

The polymer-based solid electrolyte may be, for example, a solid electrolyte including an ion-conductive polymer and a lithium salt, a solid electrolyte including a polymeric ionic liquid (PIL) and a lithium salt, or a combination thereof.

The ion-conductive polymer may be a polymer including an ion-conductive repeating unit in a main chain and/or a side chain. The ion-conductive repeating unit may be a unit having ion conductivity and may be, for example, an alkylene oxide unit and/or a hydrophilic unit. The ion-conductive polymer may include, for example, an ether-based monomer (e.g., an ether unit), an acrylic-based monomer (e.g., an acrylate unit), a methacrylic-based monomer (e.g., a methacrylate unit), a siloxane-based monomer (e.g., a siloxane unit), or one or more combinations thereof as an ion-conductive repeating unit. Non-limiting examples of the ion-conductive polymer may include polyethylene oxide (PEO), polypropylene oxide, polymethyl methacrylate, polyethyl methacrylate, polydimethylsiloxane, polyacrylic acid, polymethacrylic acid, polymethyl acrylate, polyethyl acrylate, poly2-ethylhexyl acrylate, polybutyl methacrylate, poly2-ethylhexyl methacrylate, polydecyl acrylate, polyethylene vinyl acetate, or any combination thereof. In some embodiments, the ion-conductive polymer may include, for example, PEO, PVA, PVP, polyvinylsulfone, or any combination thereof.

The PIL may include, for example, a repeating unit including i) one cation selected from among an ammonium-based cation, a pyrrolidinium-based cation, a pyridinium-based cation, a pyrimidinium-based cation, an imidazolium-based-cation, a piperidinum-based cation, a pyrazolium-based cation, an oxazolium-based cation, a pyridazinium-based cation, a phosphonium-based cation, a sulfonium-based cation, a triazolium-based cation, or any mixture thereof, and ii) at least one anion selected from among $BF_4^-$, $PF_6^-$, AsFs , $SbF_6^-$, $AlCl_4^-$, $HSO_4^-$, $ClO_4^-$, $CH_3SO_3^-$, $CF_3CO_2^-$, $(CF_3SO_2)_2N^-$, $Cl^-$, $Br^-$, $I^-$, $SO_4^{2-}$, $CF_3SO_3^-$, $(C_2F_5SO_2)_2N^-$, $(C_2F_5SO_2)(CF_3SO_2)N^-$, NOs , $Al_2Cl_7^-$, $AsF_6^-$, $CH_3COO^-$, $(CF_3SO_2)_3C^-$, $(CF_3CF_2SO_2)_2N^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, and $(O(CF_3)_2C_2(CF_3)_2O)_2PO^-$. In some embodiments, the PIL may include, for example, poly(diallyldimethylammonium)bis(trifluoromethanesulfonyl)imide (TFSI), poly(1-allyl-3-methylimidazoliumbis(trifluoromethanesulfonyl)imide), poly((N-methyl-N-propylpiperidinium bis(trifluoromethanesulfonyl)imide, or any combination thereof.

In some embodiments, the lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein $1 \leq x \leq 20$ and $1 \leq y \leq 20$), LiCl, Lil, or any combination thereof.

A polymer included in a polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte may be, for example, a polymer gel electrolyte. In some embodiments, the gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C at a pressure of about 1 atm. In some embodiments, the polymer gel electrolyte may have, for example, a gel state without including a liquid. The liquid electrolyte utilized in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt and an ionic liquid. The polymer utilized in the polymer gel electrolyte may be selected from polymers utilized in a solid polymer electrolyte. The organic solvent may be selected from organic solvents utilized in a liquid electrolyte. The lithium salt may be selected from lithium salts utilized in a polymer solid electrolyte. The ionic liquid may refer to a salt in a liquid state at room temperature or a room-temperature molten salt that has a melting point at room temperature or less and includes (e.g., consists of) only ions. The ionic liquid may include, for example, a compound including a) one cation selected from an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazolium-based cation, and a mixture thereof, and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The polymer solid electrolyte may be impregnated, for example, in a liquid electrolyte in a secondary battery to form a polymer gel electrolyte. In some embodiments, the polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

In one or more embodiments, the lithium battery may include a cathode and an anode, each including the dry electrode film prepared through the above-described method of preparing a dry electrode film, and thus the cycle characteristics of the lithium battery may be improved.

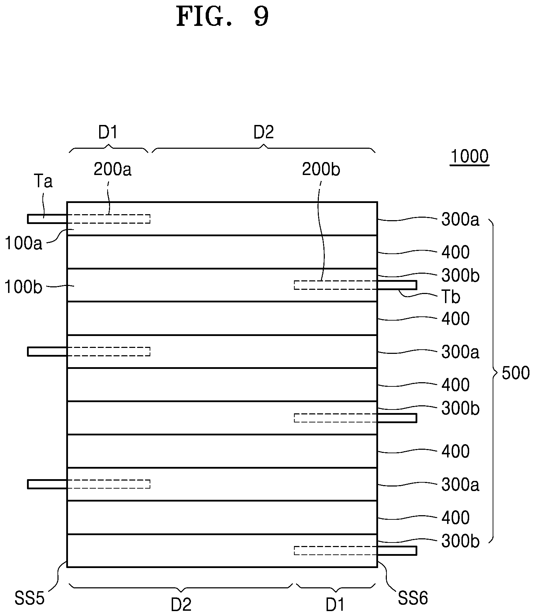

Referring to FIGs. 9 to 11, in one or more embodiments, a lithium battery 1000 may include a cathode 300a, an anode 300b, and an electrolyte 400 between the cathode 300a and the anode 300b, wherein at least one of the cathode 300a or the anode 300b may be the above-described electrode. The lithium battery 1000 may include an electrode assembly 500.

Referring to FIG. 9, in some embodiments, the electrode assembly 500 may include a plurality of cathodes 300a stacked in a thickness direction, a plurality of anodes 300b between the plurality of cathodes 300a, and a plurality of electrolytes 400 between the plurality of cathodes 300a and the plurality of anodes 300b. The cathode 300a may include a cathode current collector 200a, and the cathode current collector 200a may include a cathode tab Ta extending to the outside of a cathode active material layer 100a through one side surface SS5 of the electrode assembly 500. The anode 300b may include an anode current collector 200b, and the anode current collector 200b may include an anode tab Tb extending to the outside of an anode active material layer 100b through the other side surface SS6 of the electrode assembly 500 opposite to the one side surface SS5 of the electrode assembly 500. The lithium battery 1000 may include the electrode assembly 500. The cathode tab Ta and the anode tab Tb may be disposed on side surfaces opposite to each other, and thus a possibility of a short circuit between the cathode tab Ta and the anode tab Tb may be reduced.

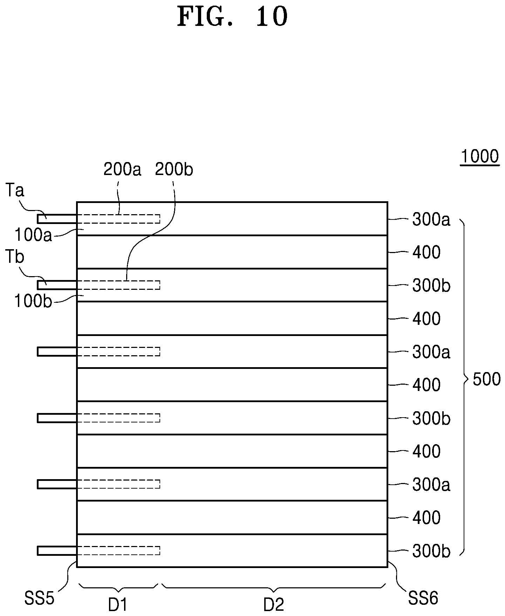

Referring to FIG. 10, in some embodiments, the electrode assembly 500 may include a plurality of cathodes 300a stacked in a thickness direction, a plurality of anodes 300b between the plurality of cathodes 300a, and a plurality of electrolytes 400 between the plurality of cathodes 300a and the plurality of anodes 300b. The cathode 300a may include a cathode current collector 200a, and the cathode current collector 200a may include a cathode tab Ta extending to the outside of a cathode active material layer 100a through one side surface SS5 of the electrode assembly 500. The anode 300b may include an anode current collector 200b, and the anode current collector 200b may include an anode tab Tb extending to the outside of an anode active material layer 100b through the same one side surface SS5 of the electrode assembly 500. The lithium battery 1000 may include the electrode assembly 500.

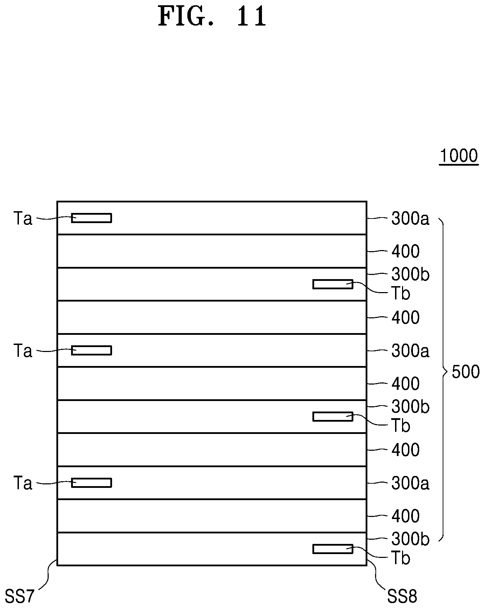

Referring to FIG. 11, in some embodiments, a plurality of cathode tabs Ta may be disposed on one side surface SS5 to be spaced apart from each other by certain intervals in a thickness direction, and a plurality of anode tabs Tb may be disposed to be spaced apart from each other by certain intervals in the thickness direction. The plurality of cathode tabs Ta may be disposed adjacent to one side surface SS7 of the electrode assembly 500 in a width direction, and the plurality of anode tabs Tb may be disposed adjacent to the other side surface SS8 of the electrode assembly 500 in the width direction. FIG. 11 is a front view of one side surface SS5 of FIG. 10. The lithium battery 1000 may include the electrode assembly 500.

Although the cathode tab Ta and the anode tab Tb are disposed on the same side surface, the cathode tab Ta and the anode tab Tb may be spaced apart from each other in the width direction, and thus a possibility of a short circuit between the cathode tab Ta and the anode tab Tb may be reduced.

The lithium battery 1000 may be (e.g., include), for example, a lithium primary battery or a lithium secondary battery. The lithium battery 1000 may be (e.g., include), for example, a lithium ion battery, a lithium solid battery, or a lithium air battery.

An electrolyte included in the lithium battery 1000 may be, for example, a liquid electrolyte or a solid electrolyte. The solid electrolyte may be, for example, an oxide-based solid electrolyte or a sulfide-based solid electrolyte.

For example, in one or more embodiments, a lithium battery may be manufactured through the following example method, but embodiments of the present disclosure are not necessarily limited thereto. A method may vary according to required conditions.

First, one or both (e.g., simultaneously) of a cathode and an anode may be prepared according to the method of preparing a dry electrode of one or more embodiments. In some embodiments, if (e.g., when) one electrode of the cathode and the anode is prepared through the above-described method of preparing a dry electrode, the other electrode may be prepared through a wet preparing method. For example, the other electrode may be prepared by preparing an electrode slurry including an electrode active material, a conductive material, a binder, and a solvent, coating an electrode current collector with the prepared electrode slurry, and drying the electrode slurry. A conductive material and a binder included in an electrode prepared in a wet type or kind may be selected from conductive materials and binders utilized in preparing such a dry electrode.

Next, a separator to be inserted between the cathode and the anode may be prepared.

As the separator, any separator commonly utilized in a lithium battery may be utilized. For example, a separator having low resistance to the movement of ions in an electrolyte and an excellent or suitable electrolyte impregnation ability may be utilized. For example, the separator may include at least one selected from among a glass fiber, polyester, Teflon, PE, PP, PTFE, and one or more combinations thereof and may be in the form of a nonwoven fabric or a woven fabric. For example, in some embodiments, a windable separator including PE, PP, and/or the like may be utilized in a lithium ion battery, and a separator having an excellent or suitable electrolyte impregnation ability may be utilized in a lithium ion polymer battery.

The separator is prepared through the following example method, but embodiments of the present disclosure are not necessarily limited to such a method. A method may be adjusted according to required conditions.

First, a polymer resin, a filler, and a solvent may be mixed to prepare a separator composition. The separator composition may be applied directly on an electrode and dried to form the separator. In some embodiments, the separator composition may be cast on a support, and then a separator film peeled off of the support may be laminated on an electrode to form the separator.

A polymer utilized for preparing the separator is not limited, and any material utilized in a binding material of an electrode plate may be utilized. For example, the polymer may include a vinylidene fluoride/hexafluoropropylene copolymer, PVDF, polyacrylonitrile, polymethyl methacrylate, or a mixture thereof.

Next, an electrolyte is prepared. The electrolyte may be as defined as in the part of the above-described lithium battery.

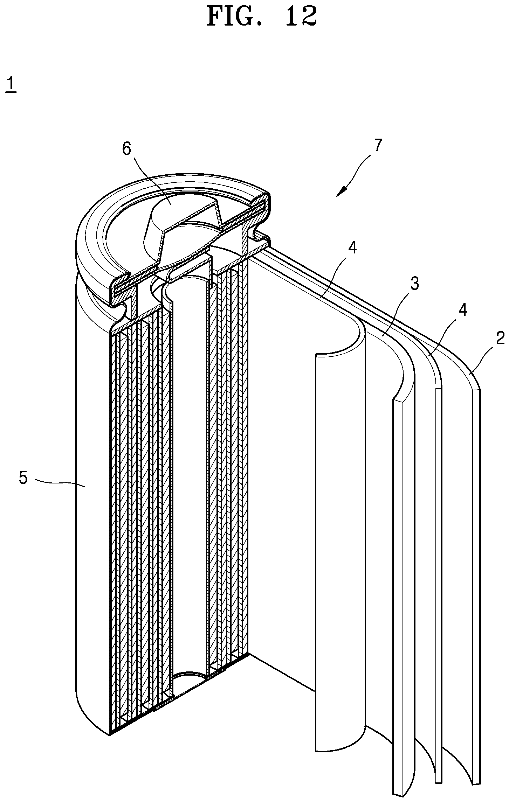

Referring to FIG. 12, a lithium battery 1 according to one or more embodiments may include a cathode 3, an anode 2, and a separator 4. The cathode 3, the anode 2, and the separator 4 may be wound or folded to form a battery structure 7. The formed battery structure 7 may be accommodated in a battery case 5. An organic electrolyte may be injected into the battery case 5, and the battery case 5 may be sealed with a cap assembly 6 to complete the lithium battery 1. The battery case 5 may have a cylindrical shape, but embodiments of the present disclosure are not necessarily limited to such a shape. For example, in some embodiments, the battery case 5 may have a prismatic shape, a thin film shape, and/or the like.

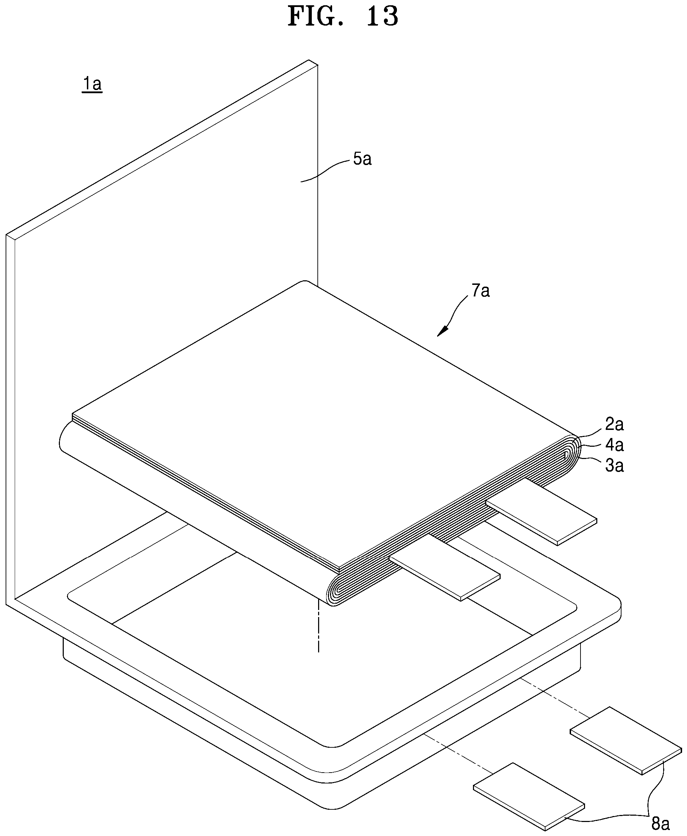

Referring to FIG. 13, a lithium battery 1a according to one or more embodiments may include a cathode 3a, an anode 2a, and a separator 4a. The separator 4a may be disposed between the cathode 3a and the anode 2a, and the cathode 3a, the anode 2a, and the separator 4a may be wound or folded to form a battery structure 7a. The formed battery structure 7a may be accommodated in a battery case 5a. The lithium battery 1a may include an electrode tab 8a serving as an electrical path for guiding a current formed in the battery structure 7a to the outside. An organic electrolyte may be injected into the battery case 5a, and the battery case 5a may be sealed to complete the lithium battery 1a. The battery case 5a may have a prismatic shape, but embodiments of the present disclosure are not necessarily limited to such a shape. For example, in some embodiments, the battery case 5a may have a cylindrical shape, a thin film shape, and/or the like.

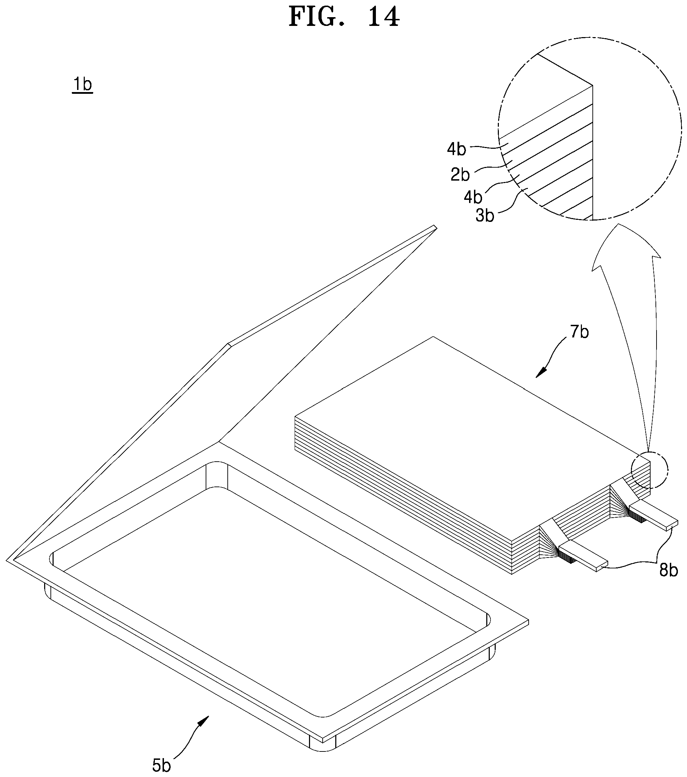

Referring to FIG. 14, a lithium battery 1b according to one or more embodiments may include a cathode 3b, an anode 2b, and a separator 4b. The separator 4b may be disposed between the cathode 3b and the anode 2b to form a battery structure 7b. The battery structure 7b may be stacked in a bi-cell structure and then accommodated in a battery case 5b. The lithium battery 1b may include an electrode tab 8b serving as an electrical path for guiding a current generated in the battery structure 7b to the outside. An organic electrolyte may be injected into the battery case 5b, and the battery case 5b may be sealed to complete the lithium battery 1b. The battery case 5b may have a prismatic shape, but embodiments of the present disclosure are not necessarily limited to such a shape. For example, in some embodiments, the battery case 5b may have a cylindrical shape, a thin film shape, and/or the like.

A pouch-type or kind lithium battery corresponds to an embodiment in which a pouch is utilized as a battery case in the lithium batteries of FIGs. 12 to 14. The pouch-type or kind lithium battery may include one or more battery structures. A separator may be disposed between a cathode and an anode to form the battery structure. After the battery structure is stacked in a bi-cell structure, the battery structure may be impregnated in an organic electrolyte, accommodated in a pouch, and sealed to complete the pouch-type or kind lithium battery. For example, In one or more embodiments, the above-described cathode, anode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

The lithium battery may have excellent or suitable lifespan characteristics and high-rate characteristics and thus may be utilized, for example, in electric vehicles (EVs). For example, the lithium battery may be utilized in hybrid vehicles such as plug-in hybrid electric vehicles (PHEVs). In some embodiments, the lithium battery may be utilized in fields in which large amounts of power are required to be stored. For example, the lithium battery may be utilized in electric bicycles, power tools, and/or the like.

A plurality of lithium batteries may be stacked to form a battery module, and a plurality of battery modules may form a battery pack. The battery pack may be utilized in all devices requiring high capacity and high output power. For example, the battery pack may be utilized in laptop computers, smartphones, electric vehicles, and/or the like. A battery module may include, for example, a plurality of batteries and a frame for holding the plurality of batteries. A battery pack may include, for example, a plurality of battery modules and a busbar for connecting the plurality of battery modules. The battery module and/or the battery pack may further include a cooling device. A plurality of battery packs may be controlled or selected by a battery management system. The battery management system may include a battery pack and a battery controller connected to the battery pack.

Hereinafter, the present disclosure will be described in more detail with reference to the following Examples and Comparative Examples. However, Examples are for illustrative purposes only and are not intended to limit the scope of the present disclosure.

**Manufacturing of lithium battery half-cell**

**Example 1: Dry cathode, bimodal cathode active material, particle diameter ratio of 4:1 of large-diameter and small-diameter cathode active materials, rotational speed ratio of 1:2 of calender rolls**

**Preparation of cathode film self-standing film**

Large-diameter $LiNi_{0.896}Co_{0.072}Mn_{0.032}O_2$ (hereinafter referred to as large-diameter NCM) with an average particle diameter (D50) of 14 $\mu$m as a first cathode active material, small-diameter $LiNi_{0.896}Co_{0.072}Mn_{0.032}O_2$ with an average particle diameter (D50) of 3.5 $\mu$m as a second cathode active material (hereinafter referred to as small-diameter NCM), a carbon conductive material (Denka Black) as a dry conductive material, and PTFE as a dry binder were put into a blade mixer at a weight ratio of 71:25:2:2 and then primarily dry-mixed at a rate of 900 rpm at a temperature of 25 °C for 12 minutes to prepare a first mixture in which the cathode active material, the conductive material, and the binder were uniformly mixed. Then, in order to allow the binder to be sufficiently fibrillized, the first mixture was additionally secondarily mixed at a temperature of 25 °C at a rate of 4,500 rpm for 22 minutes to prepare a second mixture. A separate solvent was not utilized during preparation of the first mixture and the second mixture. The prepared second mixture was put between a first calender roll having a first rotational speed and a second calender roll having a second rotational speed of a rolling device and calendered to prepare a dry cathode sheet. A gear ratio of the first calender roll to the second calender roll was 2:1, and a ratio of the first rotational speed of the first calender roll to the second rotational speed of the second calender roll was 1:2. The prepared dry cathode sheet was rolled to prepare a dry cathode film. The dry cathode film was a self-standing film without a support.

The first cathode active material and the second cathode active material are dry cathode active materials. The dry cathode active material showed a bimodal particle size distribution in a particle size distribution diagram. The first cathode active material is a large-diameter cathode active material, and the second cathode active material is a small-diameter cathode active material.

**Preparation of cathode**

A positive current collector (i.e., a cathode current collector), in which a carbon layer as a coating layer was disposed on one surface of an aluminium thin film having a thickness of 12 $\mu$m, was prepared. The coating layer may be regarded as an interlayer.

A composition including a carbon conductive material (Denka black) and PVDF was applied on an aluminium thin film and then dried to prepare the carbon layer. A thickness of the carbon layer disposed on one surface of the aluminium thin film was about 1 $\mu$m.

A dry cathode film was disposed on one surface of the cathode current collector, on which the carbon layer was disposed, to prepare a cathode in which an interlayer and a cathode active material layer (i.e., the dry cathode film) were sequentially disposed on the cathode current collector. A thickness of the cathode active material layer was about 100 $\mu$m.

**Manufacturing of coin cell**

By utilizing the cathode prepared above, a lithium metal was utilized as a counter electrode, and a solution, in which a PE separator and 1.3 M LiPF$_6$ were dissolved in EC+ethyl methyl carbonate (EMC)+DMC (volume ratio of 3:4:3), was utilized as an electrolyte to manufacture a coin cell.

**Example 2: Dry cathode, bimodal cathode active material, particle diameter ratio of 4:1 of large-diameter and small-diameter cathode active materials, rotational speed ratio of 1:4 of calender rolls**

A dry cathode film, a cathode, and a lithium battery were each manufactured in substantially the same manner as in Example 1, except that a gear ratio of a first calender roll to a second calender roll was changed to 4:1, and thus a ratio of a first rotational speed of the first calender roll to a second rotational speed of the second calender roll was changed to 1:4.

**Example 3: Dry cathode, bimodal cathode active material, particle diameter ratio of 4:1 of large-diameter and small-diameter cathode active materials, rotational speed ratio of 1:6 of calender rolls**

A dry cathode film, a cathode, and a lithium battery were each manufactured in substantially the same manner as in Example 1, except that a gear ratio of a first calender roll to a second calender roll was changed to 6:1, and thus a ratio of a first rotational speed of the first calender roll to a second rotational speed of the second calender roll was changed to 1:6.

**Example 4: Dry cathode, bimodal cathode active material, particle diameter ratio of 3:1 of large-diameter and small-diameter cathode active materials, rotational speed ratio of 1:2 of calender rolls**

A dry cathode film, a cathode, and a lithium battery were each manufactured in substantially the same manner as in Example 1, except that a particle diameter of a first cathode active material was decreased (to 10.5 $\mu$m), and thus a particle diameter ratio of the first cathode active material to a second cathode active material was changed to 3:1.

**Example 5: Dry cathode, bimodal cathode active material, particle diameter ratio of 2:1 of large-diameter and small-diameter cathode active materials, rotational speed ratio of 1:2 of calender rolls**

A dry cathode film, a cathode, and a lithium battery were each manufactured in substantially the same manner as in Example 1, except that a particle diameter of a first cathode active material was decreased (to 7 μm), and thus a particle diameter ratio of the first cathode active material to a second cathode active material was changed to 2:1.

**Comparative Example 1: Dry cathode, bimodal cathode active material, particle diameter ratio of 4:1 of large-diameter and small-diameter cathode active materials, rotational speed ratio of 1:1 of calender rolls**

A dry cathode film, a cathode, and a lithium battery were each manufactured in substantially the same manner as in Example 1, except that a gear ratio of a first calender roll to a second calender roll was changed to 1:1, and thus a ratio of a first rotational speed of the first calender roll to a second rotational speed of the second calender roll was changed to 1:1.

**Comparative Example 2: Dry cathode, bimodal cathode active material, particle diameter ratio of 4:1 of large-diameter and small-diameter cathode active materials, rotational speed ratio of 1:8 of calender rolls**

A dry cathode film was prepared in substantially the same manner as in Example 1, except that a gear ratio of a first calender roll to a second calender roll was changed to 8:1, and thus a ratio of a first rotational speed of the first calender roll to a second rotational speed of the second calender roll was changed to 1:8. A rotational speed ratio excessively increased during a process of preparing the dry cathode film, and thus cracks occurred in the dry cathode film. For example, it was impossible to manufacture a dry cathode and a lithium battery.

**Reference Example 1: Dry cathode, bimodal cathode active material, particle diameter ratio of 8:1 of large-diameter and small-diameter cathode active materials, rotational speed ratio of 1:2 of calender rolls**

A dry cathode film was prepared in substantially the same manner as in Example 1, except that a particle diameter of a first cathode active material was increased, and thus a particle diameter ratio of a first cathode active material to the second cathode active material was changed to 8:1.

**Comparative Example 3: Wet cathode, bimodal cathode active material, particle diameter ratio of 4:1 of large-diameter and small-diameter cathode active materials**

**Preparation of cathode film self-standing film**

Large-diameter $LiNi_{0.896}Co_{0.072}Mn_{0.032}O_2$ (hereinafter referred to as large-diameter NCM) with an average particle diameter (D50) of 14 μm as a first cathode active material, small-diameter $LiNi_{0.896}Co_{0.072}Mn_{0.032}O_2$ with an average particle diameter (D50) of 3.5 μm as a second cathode active material (hereinafter referred to as small-diameter NCM), a carbon conductive material (Denka Black) as a conductive material, and PTFE as a binder were mixed at a weight ratio of 71:25:2:2 to obtain a mixture, and the mixture was mixed with N-methylpyrrolidone (NMP) in an agate mortar to prepare a cathode slurry.

A substrate was required to prepare a film from the cathode slurry, and thus it was impossible to manufacture a self-standing cathode film.

**Preparation of cathode**

The prepared cathode slurry was applied on one surface of an aluminium foil cathode current collector having a thickness of 15 μm through bar coating, dried at room temperature, and then dried again under conditions of vacuum and a temperature of 120 °C to prepare a stack in which a cathode active material layer was disposed on the cathode current collector.

The prepared stack was rolled to prepare a cathode. A thickness of the cathode active material layer was about 100 μm.

**Manufacturing of coin cell**

A coin cell was manufactured in substantially the same manner as in Example 1, except that the cathode prepared above was utilized.

**Comparative Example 4: Dry cathode, monomodal cathode active material, rotational speed ratio of 1:2 of calender rolls**

A dry cathode film was prepared in substantially the same manner as in Example 1, except that a first cathode active material was utilized alone instead of a mixture of a first cathode active material and a second cathode active material.

**Reference Example 2: Dry cathode free of coating layer**

A dry cathode was prepared in substantially the same manner as in Example 1, except that a 10 μm thick aluminium thin film not coated with a carbon layer was utilized as a cathode current collector.
A portion of a cathode active material layer in the prepared cathode was present in a state of being peeled off of the cathode current collector, and additional steps for preparing a coin cell was not proceeded.

**Evaluation Example 1: Measurement of surface porosity**

A surface porosity of each of the dry cathode electrode film prepared in Examples 1 to 3 and Comparative Example 1 was measured. Results thereof are shown in Table 1.
The surface porosity of the dry cathode film was calculated as a ratio of an area occupied by pores to the total area of a surface of the dry cathode film from a scanning electron microscope image by utilizing software.
FIGs. 1A to 4A are scanning electron microscope images of surfaces of the dry cathode films prepared in Examples 1 to 3 and Comparative Example 1, respectively.
FIGs. 1B to 4B are respectively images obtained by filtering the scanning electron microscope images of FIGs. 1A to 4A by utilizing software and are images showing surface pores in white.

Table 1

|  | Surface porosity [%] |
| --- | --- |
| Example 1 (bimodal, rotational speed ratio of 1:2) | 8.26 |
| Example 2 (bimodal, rotational speed ratio of 1:4) | 9.37 |
| Example 3 (bimodal, rotational speed ratio of 1:6) | 13.49 |
| Comparative Example 1 (bimodal, rotational speed ratio of 1:1) | 7.45 |
| Comparative Example 2 (bimodal, rotational speed ratio of 1:8) | - |

As shown in Table 1 and FIGs. 1A to 4B, the dry electrode films of Examples 1 to 3 each had improved surface porosity as compared with the dry electrode film of Comparative Example 1.
In the dry cathode film of Comparative Example 1, the content (e.g., amount) of large-diameter particles disposed on a surface thereof was decreased as compared with the content (e.g., amount) of large-diameter particles disposed on a surface in each of the dry cathode films of Examples 1 to 3. The surface porosity of the dry cathode film of Comparative Example 1 was reduced.
In the dry cathode film of Comparative Example 2, a rotational speed ratio excessively increased, and thus cracks occurred in the dry cathode film. Therefore, it was impossible to measure physical properties.
Even in the wet cathode of Comparative Example 3, a relatively more amount of the binder was disposed on a surface of the wet cathode during a process of drying the cathode slurry, and thus a ratio of an area occupied by large-diameter particles on the surface of the wet cathode was low. In some embodiments, the surface porosity of the wet cathode of Comparative Example 3 was reduced.

**Evaluation Example 2: Evaluation of vertical binding force of cathode active material layer (I)**

By utilizing SAICAS (SAICAS EN-EX manufactured by Dipla Wintes Co., Ltd., in JAPAN), the binding characteristics of the cathode active material layers included in the cathodes of Example 1 and Comparative Example 4 were each analyzed.
By utilizing a diamond blade with a width of 1 mm, under conditions of a clearance angle of 10°, a rake angle of 20°, a shear angle of 45°, a horizontal velocity of 4 μm/s, and a vertical velocity of 0.4 μm/s, a constant velocity analysis was performed to measure a vertical binding force Fv according to a depth.

First, a first constant velocity analysis was performed from a first position on a surface of the cathode active material layer to a surface of the cathode current collector, and a blade was horizontally moved along the surface of the cathode current collector to remove the cathode active material layer. Next, at a position of 10 $\mu$m behind the first position, a second constant velocity analysis was performed under the same conditions as the first constant velocity analysis. Data measured in the second constant velocity analysis was utilized.

In the cathode active material layer, a vertical binding force of the cathode active material layer was measured, and measured data was normalized to a binding force graph area to derive a vertical relative binding force $F_{VR}$ according to a depth of the cathode active material layer.

The vertical binding force of the cathode active material layer was derived by utilizing data measured in a section from a first point spaced apart from the surface of the cathode active material layer by 5 % of the total thickness of the cathode active material layer to a second point spaced and/or apart from the surface of the electrode current collector by 5 % of the total thickness of the cathode active material layer. For example, data near the surface of the cathode active material layer and data near the surface of the electrode current collector were excluded to prevent or reduce measurement errors.

A change ratio of the vertical relative binding force $F_{VR}$ was calculated by utilizing Equation 1 from data about the derived vertical relative binding force $F_{VR}$ of the cathode active material layer. For example, an arithmetic average value was also calculated from the data about the derived vertical relative binding force $F_{VR}$ of the cathode active material layer.

change ratio of vertical relative binding force $F_{VR}$ = [(maximum value of vertical relative binding force - minimum value of vertical relative binding force) / minimum value of vertical relative binding force)] $\times$ 100    equation 1

As a result of measurement, the change ratio of the vertical relative binding force of the cathode active material layer included in the cathode of Example 1 was 200 % or less. For example, it was confirmed that the cathode active material layer of Example 1 had substantially uniform binding force and composition distribution irrespective of a position of the cathode active material layer in a thickness direction. For example, it was confirmed that a ratio of a binder on a surface of the cathode active material layer of Example 1 decreased and a ratio of large-diameter particles increased.

For example, the change ratio of the vertical relative binding force of the cathode active material layer included in the cathode of Comparative Example 3 exceeded 500 %. For example, it was confirmed that the cathode active material layer of Comparative Example 3 had considerably changed binding force and composition distribution according to a position of the cathode active material layer in a thickness direction. For example, it was confirmed that a ratio of a binder on a surface of the cathode active material layer of Comparative Example 3 increased and a ratio of large-diameter particles decreased.

**Evaluation Example 3: Evaluation of horizontal binding force of cathode active material layer (II)**

By utilizing SAICAS (SAICAS EN-EX manufactured by Dipla Wintes Co., Ltd., in JAPAN), the binding characteristics of the cathode active material layers included in the cathodes of Example 1 and Comparative Example 3 were each analyzed.

By utilizing a diamond blade with a width of 1 mm, under conditions of a clearance angle of 10°, a rake angle of 20°, a shear angle of 45°, a horizontal velocity of 4 $\mu$m/s, and a vertical velocity of 0.4 $\mu$m/s, a constant velocity analysis was performed to measure a horizontal binding force $F_H$ according to a depth.

First, a first constant velocity analysis was performed from a first position on the surface of the cathode active material layer to the surface of the cathode current collector, and a blade was horizontally moved along the surface of the cathode current collector to remove the cathode active material layer. Next, at a position of 10 $\mu$m behind the first position, a second constant velocity analysis was performed under the same conditions as the first constant velocity analysis. Data measured in the second constant velocity analysis was utilized.

A first horizontal binding force $F_{H1}$ at a first point spaced apart from the surface of the cathode active material layer by 10 % of the total thickness of the cathode active material layer and a second horizontal binding force $F_{H2}$ at a second point spaced apart from the surface of the cathode current collector by 10 % of the total thickness of the cathode active material layer were measured.

A horizontal binding force ratio between the first point and the second point is defined by Equation 2:

## Equation 2

horizontal binding force ratio (%) between first point and second point = $[F_{H2}/F_{H1}] \times 100$

As a result of measurement, a horizontal binding force ratio of the cathode active material layer of Example 1 was 70 % or more.

For example, the horizontal binding force ratio of the cathode active material layer of Comparative Example 3 was less than 40 %.

In one or more embodiments, the horizontal binding force ratio of the cathode active material layer of Example 1 was increased as compared with the cathode active material layer of Comparative Example 3.

For example, it was confirmed that the cathode active material layer of Example 1 had more substantially uniform binding force and composition distribution than the cathode active material layer of Comparative Example 3.

### Evaluation Example 4: Evaluation of room temperature high-rate characteristics

The lithium batteries manufactured in Examples 1 to 3 and Comparative Example 1 were each charged at a constant current rate of 0.1 C at a temperature of 25 °C until a voltage reached 4.4 V (vs. Li), and then, in a constant voltage mode, while 4.4 V was maintained, the charging was cut off at a current rate of 0.05 C. Subsequently, the lithium batteries were each discharged at a constant current rate of 0.1 C until the voltage reached 2.8 V (vs. Li) during discharging (formation cycle).

The lithium batteries subjected to the formation cycle were each charged at a constant current rate of 0.2 C at a temperature of 25 °C until the voltage reached 4.4 V (vs. Li). Next, the lithium batteries were each discharged at a constant current rate of 0.2 C until the voltage reached 2.8 V (vs. Li) during discharging (1st cycle).

The lithium batteries subjected to the formation cycle were each charged at a constant current rate of 0.2 C at a temperature of 25 °C until the voltage reached 4.4 V (vs. Li). Next, the lithium batteries were each discharged at a constant current rate of 0.33 C until the voltage reached 2.8 V (vs. Li) during discharging (2nd cycle).

The lithium batteries subjected to the formation cycle were each charged at a constant current rate of 0.2 C at a temperature of 25 °C until the voltage reached 4.4 V (vs. Li). Next, the lithium batteries were each discharged at a constant current rate of 0.5 C until the voltage reached 2.8 V (vs. Li) during discharging (3rd cycle).

The lithium batteries subjected to the formation cycle were each charged at a constant current rate of 0.2 C at a temperature of 25 °C until the voltage reached 4.4 V (vs. Li). Next, the lithium batteries were each discharged at a constant current rate of 1.0 C until the voltage reached 2.8 V (vs. Li) during discharging (4th cycle).

The lithium batteries subjected to the formation cycle were each charged at a constant current rate of 0.2 C at a temperature of 25 °C until the voltage reached 4.4 V (vs. Li). Next, the lithium batteries were each discharged at a constant current rate of 2.0 C until the voltage reached 2.8 V (vs. Li) during discharging (5th cycle).

The lithium batteries subjected to the formation cycle were each charged at a constant current rate of 0.2 C at a temperature of 25 °C until the voltage reached 4.4 V (vs. Li). Then, the lithium batteries were each discharged at a constant current rate of 3.0 C until the voltage reached 2.8 V (vs. Li) during discharging (6th cycle).

The lithium batteries were each rested for 10 minutes after every charging/discharging cycle. Charging/discharging test results at room temperature are shown in Table 2. High-rate characteristics are defined by Equation 3:

high-rate characteristics (%) = [discharge capacity at 5th /cycle/discharge capacity at 1st cycle] $\times$ 100          equation 3

Table 2

|  | High-rate characteristics (2 C/0.2 C) [%] |
|---|---|
| Example 1 (bimodal, rotational speed ratio of 1:2) | 83.5 |
| Example 2 (bimodal, rotational speed ratio of 1:4) | 84.7 |
| Example 3 (bimodal, rotational speed ratio of 1:6) | 85.3 |
| Comparative Example 1 (bimodal, rotational speed ratio of 1:1) | 81.2 |

As shown in Table 2, the high-rate characteristics of the lithium batteries of Examples 1 to 3 were each improved as compared with the lithium battery of Comparative Example 1.

**Evaluation Example 5: Evaluation of charge/discharge characteristics**

The lithium batteries manufactured in Examples 1 to 5, Reference Example 1 and Comparative Examples 1 and 3 to 4 were each charged at a constant current rate of 0.1 C at a temperature of 25 °C until a voltage reached 4.3 V (vs. Li), and then, in a constant voltage mode, while 4.3 V was maintained, the charging was cut off at a current rate of 0.05 C. Subsequently, the lithium batteries were each discharged at a constant current rate of 0.1 C until the voltage reached 2.8 V (vs. Li) during discharging (formation cycle).

The lithium batteries subjected to the formation cycle were each charged at a constant current rate of 0.5 C at a temperature of 25 °C until the voltage reached 4.3 V (vs. Li). Subsequently, the lithium batteries were each discharged at a constant current rate of 0.5 C until the voltage reached 2.8 V (vs. Li) during discharging. Such a cycle was repeated up to a 200$^{th}$ cycle (200 times).

The lithium batteries were each rested for 10 minutes after every charging/discharging cycle. A capacity retention ratio at a 200$^{th}$ cycle is defined by Equation 4:

$$\text{capacity retention ratio (\%)} = [\text{discharge capacity at 200}^{th}\text{ cycle/discharge capacity at 1}^{st}\text{ cycle}] \times 100 \qquad \text{equation 4}$$

As compared with the lithium batteries of Comparative Example 1, Reference Example 1 and Comparative Examples 3 to 4, the lifespan characteristics at room temperature of each of the lithium batteries of Examples 1 to 5 were generally improved.

It was determined that the lithium batteries of Examples 1 to 5 had improved lifespan characteristics because the lithium batteries were manufactured at a rotational speed ratio of calender rolls in a certain range, and a particle diameter ratio of large-diameter particles and small-diameter particles was in a certain range.

It was determined that the lithium battery of Reference Example 1 had low lifespan characteristics because a certain particle diameter ratio of large-diameter particles and small-diameter particles was excessively increased to form agglomerates and cause nonuniform dispersion in the dry cathode film.

It was determined that the lithium battery of Comparative Example 3 had low lifespan characteristics because a binding force between an electrode active material layer and a current collector was relatively low to cause separation between the electrode active material layer and the current collector during charging or discharging and increase internal resistance.

It was determined that the lithium battery of Comparative Example 4 had low lifespan characteristics because, due to the utilization of a monomodal cathode active material, the internal resistance of an electrode film increased and film strength decreased to induce the deterioration of an electrode during charging or discharging.

According to one or more aspects of embodiments of the present disclosure, the content (e.g., amount) of large-diameter electrode active material disposed on a surface of a dry electrode film may be adjusted to improve the electrolyte impregnability of the dry electrode film, thereby improving the high-rate characteristics of a lithium battery adopting such a dry electrode.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the present disclosure as defined by the appended claims and equivalents thereof.

Embodiments are set out in the following clauses:

Clause 1. A method of preparing a dry electrode film, the method comprising:

providing a dry mixture comprising a dry electrode active material and a dry binder; and
processing the dry mixture into a dry electrode film by using a rolling device comprising a first calender roll and a second calender roll, wherein the first calender roll has a first rotational speed, and the second calender roll has a second rotational speed,
wherein,
a ratio of the first rotational speed to the second rotational speed is in a range of less than 1:1 to about 1:6,
the dry electrode active material comprises a first electrode active material and a second electrode active material, and
a particle diameter of the first electrode active material is different from a particle diameter of the second electrode active material.

Clause 2. The method of clause 1, wherein the first electrode active material is a large-diameter electrode active material having a larger particle diameter than the second electrode active material,

the second electrode active material is a small-diameter electrode active material having a smaller particle diameter than the first electrode active material, and
a ratio of an area occupied by particles of the first electrode active material to a total area of a surface of the dry electrode film is in a range of about 30 % to about 90 %.

Clause 3. The method of clause 1 or clause 2, wherein a loading level of the dry electrode film is lower than a loading level of a dry electrode film processed by using a rolling device in which the ratio of the first rotational speed to the second rotational speed is 1:1.

Clause 4. The method of any one of clauses 1 to 3, wherein a ratio (LL1/LL2) of a loading level (LL1) of the dry electrode film to a loading level (LL2) of a dry electrode film processed by using a rolling device in which the ratio of the first rotational speed to the second rotational speed is 1:1 is 0.9 or less.

Clause 5. The method of any one of clauses 1 to 4, wherein the dry electrode film has a loading level (LL1) of about 20 mg/cm$^2$ to about 30 mg/cm$^2$.

Clause 6. The method of any one of clauses 1 to 5, wherein a packing density of the dry electrode film is lower than a packing density of a dry electrode film processed by using a rolling device in which the ratio of the first rotational speed to the second rotational speed is 1:1.

Clause 7. The method of any one of clauses 1 to 6, wherein a ratio (P1/P2) of a surface porosity (P1) of the dry electrode film to a surface porosity (P2) of a dry electrode film processed by using a rolling device in which the ratio of the first rotational speed to the second rotational speed is 1:1 is 1.1 or more.

Clause 8. The method of any one of clauses 1 to 7, wherein the dry electrode film has a surface porosity of about 8 % to about 30 %.

Clause 9. The method of any one of clauses 1 to 8, wherein a ratio (d1/d2) of a particle diameter (d1) of the first electrode active material to a particle diameter (d2) of the second electrode active material is in a range of more than 1 to about 6.

Clause 10. The method of any one of clauses 1 to 9, wherein a particle diameter of the first electrode active material is in a range of about 10 $\mu$m to about 40 $\mu$m, and a particle diameter of the second electrode active material is in a range of about 1 $\mu$m to about 10 $\mu$m.

Clause 11. The method of any one of clauses 1 to 10, wherein the electrode active material has a bimodal particle size distribution which comprises, in a particle size distribution diagram, a first particle size peak corresponding to the first electrode active material, and a second particle size peak corresponding to the second electrode active material.

Clause 12. The method of any one of clauses 1 to 11, wherein a weight ratio of the first electrode active material to the second electrode active material is in a range of about 90:10 to about 60:40.

Clause 13. The method of any one of clauses 1 to 12, wherein the dry electrode active material comprises a lithium transition metal oxide, and

the lithium transition metal oxide is represented by a formula selected from Formulas 1 to 8 below:

Formula 1        $Li_aNi_xCo_yM_zO_{2-b}A_b$

wherein, in Formula 1, $1.0 \leq a \leq 1.2$, $0 \leq b \leq 0.2$, $0.8 \leq x < 1$, $0 \leq y \leq 0.3$, $0 < z \leq 0.3$, $x+y+z=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A is F, S, Cl, Br, or a combination thereof,

Formula 2        $LiNi_xCo_yMn_zO_2$

Formula 3        $LiNi_xCo_yAl_zO_2$

wherein, in Formula 2 and Formula 3, $0.8 \leq x \leq 0.95$, $0 \leq y \leq 0.2$, $0 < z \leq 0.2$, and $x+y+z=1$,

Formula 4        $LiNi_xCo_yMn_zAl_wO_2$

wherein, in Formula 4, $0.8 \leq x \leq 0.95$, $0 \leq y \leq 0.2$, $0 < z \leq 0.2$, $0 < w \leq 0.2$, and $x+y+z+w=1$,

Formula 5        $Li_aCO_xM_yO_{2-b}A_b$

wherein, in Formula 5, $1.0 \leq a \leq 1.2$, $0 \leq b \leq 0.2$, $0.9 \leq x \leq 1$, $0 \leq y \leq 0.1$, $x+y=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A is F, S, Cl, Br, or a combination thereof,

Formula 6        $Li_aNi_xMn_yM'_zO_{2-b}A_b$

wherein, in Formula 6, $1.0 \leq a \leq 1.2$, $0 \leq b \leq 0.2$, $0 < x \leq 0.3$, $0.5 \leq y < 1$, $0 < z \leq 0.3$, $x+y+z=1$, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A is F, S, Cl, Br, or a combination thereof,

Formula 7        $Li_aM1_xM2_yPO_{4-b}X_b$

wherein, in Formula 7, $0.90 \leq a \leq 1.1$, $0 \leq x \leq 0.9$, $0 \leq y \leq 0.5$, $0.9 < x+y < 1.1$, $0 \leq b \leq 2$, M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof, and

Formula 8             $Li_aM3_zPO_4$

wherein, in Formula 8, $0.90 \leq a \leq 1.1$, $0.9 \leq z \leq 1.1$, and M3 is chromium (Cr), manganese (Mn), iron (Fe), cobalt (Co), nickel (Ni), copper (Cu), zirconium (Zr), or a combination thereof.

Clause 14. The method of any one of clauses 1 to 13, wherein the dry binder comprises a fibrillized binder and a fluorine-based binder,

wherein a glass transition temperature (Tg) of the dry binder is in a range of about 15 °C to about 100 °C, and a content of the dry binder is in a range of about 0.1 wt% to about 5 wt% with respect to a total weight of the dry electrode film.

Clause 15. The method of any one of clauses 1 to 14, wherein the dry electrode film comprises a dry conductive material,

wherein the dry conductive material comprises a carbon-based conductive material,
the carbon-based conductive material comprises a fibrous carbon-based material having an aspect ratio of 10 or more, a particulate carbon-based material having an aspect ratio of less than 10, or a combination thereof, and a content of the dry conductive material is in a range of about 0.1 wt% to about 5 wt% with respect to a total weight of the dry electrode film.

Clause 16. The method of any one of clauses 1 to 15, wherein the dry electrode film is free of a residual process solvent and has a tensile strength of about 500 kPa to about 5,000 kPa.

Clause 17. A dry electrode comprising:

an electrode current collector; and
a dry electrode film disposed on one surface or two surfaces of the electrode current collector, the dry electrode film being prepared through the method of any one of clauses 1 to 16.

Clause 18. The dry electrode of clause 17, wherein an area occupied by pores in a total area of a surface of the dry electrode film, as measured from a scanning electron microscope image of the surface of the dry electrode film, is in a range of about 8 % to about 30 %.

Clause 19. The dry electrode of clause 17 or clause 18, wherein the electrode current collector comprises a substrate and an interlayer disposed between the substrate and the dry electrode film,
wherein the interlayer comprises a carbon-based conductive material.

Clause 20. The dry electrode of any one of clauses 17 to 19, wherein the electrode current collector comprises a base film and a metal layer disposed on one surface or two surfaces of the base film,

wherein the base film comprises a polymer, wherein the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof.

Clause 21. A lithium battery comprising:

a first electrode;
a second electrode; and
an electrolyte disposed between the first electrode and the second electrode,
wherein the first electrode, the second electrode, or a combination thereof is the dry electrode of any one of clauses 17 to 20.

Clause 22. The lithium battery of clause 21, wherein the electrolyte comprises a liquid electrolyte, a solid electrolyte, a gel electrolyte, or a combination thereof.

**Claims**

1. A method of preparing a dry electrode film, the method comprising:

   providing a dry mixture comprising a dry electrode active material and a dry binder; and
   processing the dry mixture into a dry electrode film by utilizing a rolling device comprising a first calender roll and a second calender roll, the first calender roll having a first rotational speed, and the second calender roll having a second rotational speed,
   wherein,
   a ratio of the first rotational speed to the second rotational speed is in a range of 1:greater than 1 to about 1:6, the dry electrode active material comprises a first electrode active material and a second electrode active material, and
   a particle diameter of the first electrode active material is different from a particle diameter of the second electrode active material.

2. The method as claimed in claim 1, wherein,

   the first electrode active material is a large-diameter electrode active material having a larger particle diameter than that of the second electrode active material,
   the second electrode active material is a small-diameter electrode active material having a smaller particle diameter than that of the first electrode active material, and
   a ratio of an area occupied by particles of the first electrode active material in a surface of the dry electrode film to a total area of the surface of the dry electrode film is in a range of about 30 % to about 90 %.

3. The method as claimed in claim 1 or claim 2, wherein a loading level of the dry electrode film is lower than a loading level of a comparable dry electrode film processed by utilizing the rolling device in which the ratio of the first rotational speed to the second rotational speed is 1:1.

4. The method as claimed in any one of claims 1 to 3, wherein a ratio (LL1/LL2) of a loading level (LL1) of the dry electrode film to a loading level (LL2) of a comparable dry electrode film processed by utilizing the rolling device in which the ratio of the first rotational speed to the second rotational speed is 1:1 is 0.9 or less.

5. The method as claimed in any one of claims 1 to 4, wherein the dry electrode film has a loading level (LL1) of about 20 mg/cm$^2$ to about 30 mg/cm$^2$.

6. The method as claimed in any one of claims 1 to 5, wherein a packing density of the dry electrode film is lower than a packing density of a comparable dry electrode film processed by utilizing the rolling device in which the ratio of the first rotational speed to the second rotational speed is 1:1.

7. The method as claimed in any one of claims 1 to 6, wherein a ratio (P1/P2) of a surface porosity (P1) of the dry electrode film to a surface porosity (P2) of a comparable dry electrode film processed by utilizing the rolling device in which the ratio of the first rotational speed to the second rotational speed is 1:1 is 1.1 or more.

8. The method as claimed in any one of claims 1 to 7, wherein the dry electrode film has a surface porosity of about 8 % to about 30 %.

9. The method as claimed in any one of claims 1 to 8, wherein a ratio (d1/d2) of a particle diameter (d1) of the first electrode active material to a particle diameter (d2) of the second electrode active material is in a range of more than 1 to about 6.

10. The method as claimed in any one of claims 1 to 9, wherein:

    (i) a particle diameter of the first electrode active material is in a range of about 10 $\mu$m to about 40 $\mu$m, and a particle diameter of the second electrode active material is in a range of about 1 $\mu$m to about 10 $\mu$m; and/or
    (ii) the dry electrode active material has a bimodal particle size distribution which comprises, in a particle size distribution diagram, a first particle size peak corresponding to the first electrode active material, and a second particle size peak corresponding to the second electrode active material.

11. The method as claimed in any one of claims 1 to 10, wherein:

(i) a weight ratio of the first electrode active material to the second electrode active material is in a range of about 90:10 to about 60:40; and/or

(ii) the dry electrode active material comprises a lithium transition metal oxide, and

the lithium transition metal oxide is represented by a formula selected from among Formulas 1 to 8:

Formula 1 $\qquad$ $Li_aNi_xCo_yM_zO_{2-b}A_b$

wherein, in Formula 1, $1.0 \leq a \leq 1.2$, $0 \leq b \leq 0.2$, $0.8 \leq x < 1$, $0 \leq y \leq 0.3$, $0 < z \leq 0.3$, $x+y+z=1$, M is manganese, niobium, vanadium, magnesium, gallium, silicon, tungsten, molybdenum, iron, chromium, copper, zinc, titanium, aluminium, boron, or a combination thereof, and A is fluorine, sulfur, chlorine, bromine, or a combination thereof,

Formula 2 $\qquad$ $LiNi_xCo_yMn_zO_2$

Formula 3 $\qquad$ $LiNi_xCo_yAl_zO_2$

wherein, in Formula 2 and Formula 3, $0.8 \leq x \leq 0.95$, $0 \leq y \leq 0.2$, $0 < z \leq 0.2$, and $x+y+z=1$,

Formula 4 $\qquad$ $LiNi_xCo_yMn_zAl_wO_2$

wherein, in Formula 4, $0.8 \leq x \leq 0.95$, $0 \leq y \leq 0.2$, $0 < z \leq 0.2$, $0 < w \leq 0.2$, and $x+y+z+w=1$,

Formula 5 $\qquad$ $Li_aCo_xM_yO_{2-b}A_b$

wherein, in Formula 5, $1.0 \leq a \leq 1.2$, $0 \leq b \leq 0.2$, $0.9 \leq x \leq 1$, $0 \leq y \leq 0.1$, $x+y=1$, M is manganese, niobium, vanadium, magnesium, gallium, silicon, tungsten, molybdenum, iron, chromium, copper, zinc, titanium, aluminium, boron, or a combination thereof, and A is fluorine, sulfur, chlorine, bromine, or a combination thereof,

Formula 6 $\qquad$ $Li_aNi_xMn_yM'_zO_{2-b}A_b$

wherein, in Formula 6, $1.0 \leq a \leq 1.2$, $0 \leq b \leq 0.2$, $0 < x \leq 0.3$, $0.5 \leq y < 1$, $0 < z \leq 0.3$, $x+y+z=1$, M' is cobalt, niobium, vanadium, magnesium, gallium, silicon, tungsten, molybdenum, iron, chromium, copper, zinc, titanium, aluminium, boron, or a combination thereof, and A is fluorine, sulfur, chlorine, bromine, or a combination thereof,

Formula 7 $\qquad$ $Li_aM1_xM2_yPO_{4-b}X_b$

wherein, in Formula 7, $0.90 \leq a \leq 1.1$, $0 \leq x \leq 0.9$, $0 \leq y \leq 0.5$, $0.9 < x+y < 1.1$, $0 \leq b \leq 2$, M1 is chromium, manganese, iron, cobalt, nickel, copper, zirconium, or a combination thereof, M2 is magnesium, calcium, strontium, barium, titanium, zinc, boron, niobium, gallium, indium, molybdenum, tungsten, aluminium, silicon, chromium, vanadium, scandium, yttrium, or a combination thereof, and X is oxygen, fluorine, sulfur, phosphorus, or a combination thereof, and

Formula 8 $\qquad$ $Li_aM3_zPO_4$

wherein, in Formula 8, $0.90 \leq a \leq 1.1$, $0.9 \leq z \leq 1.1$, and M3 is chromium, manganese, iron, cobalt, nickel, copper, zirconium, or a combination thereof; and/or

(iii) the dry binder comprises at least one of a fibrillized binder or a fluorine-based binder,

wherein a glass transition temperature (Tg) of the dry binder is in a range of about 15 °C to about 100 °C, and an amount of the dry binder is in a range of about 0.1 wt% to about 5 wt% with respect to a total weight of the dry electrode film; and/or

(iv) the dry electrode film comprises a dry conductive material,

wherein the dry conductive material comprises a carbon-based conductive material,

the carbon-based conductive material comprises a fibrous carbon-based material having an aspect ratio of 10 or more, a particulate carbon-based material having an aspect ratio of less than 10, or a combination thereof, and

an amount of the dry conductive material is in a range of about 0.1 wt% to about 5 wt% with respect to a total weight of the dry electrode film; and/or

(v) the dry electrode film is free of a residual process solvent and has a tensile strength of about 500 kPa to about 5,000 kPa.

12. A dry electrode comprising:

an electrode current collector; and

a dry electrode film on at least one surface of the electrode current collector, the dry electrode film being prepared through the method as claimed in any one of claims 1 to 11.

13. The dry electrode as claimed in claim 12, wherein an area occupied by pores in a surface of the dry electrode film relative to a total area of the surface of the dry electrode film, as measured from a scanning electron microscope image of the surface of the dry electrode film, is in a range of about 8 % to about 30 %.

14. The dry electrode as claimed in claim 12 or claim 13, wherein:

(i) the electrode current collector comprises a substrate and an interlayer between the substrate and the dry electrode film, and

wherein the interlayer comprises a carbon-based conductive material; and/or

(ii) the electrode current collector comprises a base film and a metal layer on at least one surface of the base film,

wherein the base film comprises a polymer, the polymer comprising polyethylene terephthalate, polyethylene, polypropylene, polybutylene terephthalate, polyimide, or a combination thereof, and

wherein the metal layer comprises indium, copper, magnesium, titanium, iron, cobalt, nickel, zinc, aluminium, germanium, lithium, or an alloy thereof.

15. A lithium battery comprising:

a first electrode;

a second electrode; and

an electrolyte between the first electrode and the second electrode,

wherein at least one of the first electrode or the second electrode is the dry electrode as claimed in any one of claims 12 to 14;

optionally wherein the electrolyte comprises a liquid electrolyte, a solid electrolyte, a gel electrolyte, or a combination thereof.

# FIG. 1A

# FIG. 1B

FIG. 2A

FIG. 2B

FIG. 3A

FIG. 3B

FIG. 4A

FIG. 4B

# FIG. 5A

100
300
200

# FIG. 5B

100
200  300
100

# FIG. 5C

```
┌─────────────────────────────────┐
│                                 │─── 100 ┐
├─────────────────────────────────┤─── 250 ├ 300
└─────────────────────────────────┘─── 200 ┘
```

# FIG. 5D

```
┌─────────────────────────────────┐
│                                 │─── 100 ┐
├─────────────────────────────────┤─── 250 │
├─────────────────────────────────┤─── 200 ├ 300
├─────────────────────────────────┤─── 250 │
└─────────────────────────────────┘─── 100 ┘
```

# FIG. 6

# FIG. 7A

# FIG. 7B

# FIG. 7C

# FIG. 7D

# FIG. 7E

# FIG. 7F

## FIG. 8

# FIG. 9

# FIG. 10

# FIG. 11

1000

Ta — 300a
— 400
300b
Tb
— 400
Ta — 300a
— 400
300b
Tb
— 400
Ta — 300a
— 400
300b
Tb

500

SS7

SS8

# FIG. 12

# FIG. 13

# FIG. 14

1b

4b
2b
4b
3b

7b

8b

5b

# FIG. 15

Europäisches
Patentamt

European
Patent Office

Office européen
des brevets

**EUROPEAN SEARCH REPORT**

Application Number

EP 24 16 5582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/113498 A1 (PANASONIC IP MAN CO LTD [JP]) 2 June 2022 (2022-06-02) * paragraphs [0002], [0011], [0012], [0018], [0019], [0026], [0033] - [0041], [0040], [0046], [0061] * * figures 3-5 * * table 1 * | 1-15 | INV. H01M4/04 H01M4/136 H01M4/1391 H01M10/0525 ADD. H01M4/131 H01M4/02 |
| A | KR 2023 0033001 A (LG ENERGY SOLUTION LTD [KR]) 7 March 2023 (2023-03-07) * the whole document * | 1-15 | |
| A | US 2023/042207 A1 (KANG SEONG-WOOK [KR] ET AL) 9 February 2023 (2023-02-09) * the whole document * | 1-15 | |
| A | WO 2023/014126 A1 (LG ENERGY SOLUTION LTD [KR]) 9 February 2023 (2023-02-09) * the whole document * | 1-15 | |

TECHNICAL FIELDS
SEARCHED        (IPC)

H01M

The present search report has been drawn up for all claims

| Place of search | Date of completion of the search | Examiner |
|---|---|---|
| The Hague | 2 October 2024 | Forestier, Gilles |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 5582

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2024

| Patent document cited in search report | Publication date | Patent family member(s) | Publication date |
|---|---|---|---|
| WO 2022113498 A1 | 02-06-2022 | CN 116472619 A | 21-07-2023 |
| | | EP 4254539 A1 | 04-10-2023 |
| | | JP WO2022113498 A1 | 02-06-2022 |
| | | US 2023369569 A1 | 16-11-2023 |
| | | WO 2022113498 A1 | 02-06-2022 |
| KR 20230033001 A | 07-03-2023 | KR 20230033001 A | 07-03-2023 |
| | | US 2023114069 A1 | 13-04-2023 |
| US 2023042207 A1 | 09-02-2023 | EP 4152445 A1 | 22-03-2023 |
| | | KR 20240054956 A | 26-04-2024 |
| | | US 2023042207 A1 | 09-02-2023 |
| | | US 2024274823 A1 | 15-08-2024 |
| WO 2023014126 A1 | 09-02-2023 | CN 117378058 A | 09-01-2024 |
| | | EP 4318650 A1 | 07-02-2024 |
| | | JP 2024508512 A | 27-02-2024 |
| | | KR 20230022038 A | 14-02-2023 |
| | | US 2024274780 A1 | 15-08-2024 |
| | | WO 2023014126 A1 | 09-02-2023 |

EPO FORM P0459

For more details about this annex : see Official Journal of the European Patent Office, No. 12/82